(19)

Europäisches
Patentamt
European
Patent Office
Office européen
des brevets

(11) **EP 2 258 985 A1**

(12) **EUROPEAN PATENT APPLICATION**
published in accordance with Art. 153(4) EPC

(43) Date of publication:
**08.12.2010 Bulletin 2010/49**

(51) Int Cl.:
***F23N 5/18*** (2006.01)     ***F23N 5/26*** (2006.01)

(21) Application number: **09717284.5**

(22) Date of filing: **24.02.2009**

(86) International application number:
**PCT/JP2009/000815**

(87) International publication number:
**WO 2009/110191 (11.09.2009 Gazette 2009/37)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **06.03.2008 JP 2008056816**
**06.03.2008 JP 2008056817**
**06.03.2008 JP 2008056818**

(71) Applicants:
- **Panasonic Corporation**
  **Kadoma-shi**
  **Osaka 571-8501 (JP)**
- **The High Pressure Gas Safety Institute of Japan**
  **Tokyo 105-8447 (JP)**

(72) Inventors:
- **NAKAMURA, Hirozumi c/o Panasonic Corporation**
  **Osaka-shi**
  **Osaka 540-6207 (JP)**

- **YOKOHATA, Mitsuo c/o Panasonic Corporation**
  **Osaka-shi**
  **Osaka 540-6207 (JP)**
- **KOBA, Yasuo c/o Panasonic Corporation**
  **Osaka-shi**
  **Osaka 540-6207 (JP)**
- **KUBO, Kazuo c/o Panasonic Corporation**
  **Osaka-shi**
  **Osaka 540-6207 (JP)**
- **NAMBA, Mitsuo c/o T. H. Pr. Gas Saf. Int. of Japan**
  **Machida-shi**
  **Tokyo (JP)**
- **SAITO, Hisashi c/o T.H. Pr. Gas Saf. Int. of Japan**
  **Machida-shi**
  **Tokyo (JP)**

(74) Representative: **Schwabe - Sandmair - Marx**
**Patentanwälte**
**Stuntzstraße 16**
**81677 München (DE)**

(54) **INSTRUMENT MANAGEMENT SYSTEM, AND GAS SUPPLY SYSTEM**

(57)     It is an object to acquire in real time information about the type of an appliance used at home, a cumulative time elapsed from installation of the appliance, and the like; preliminarily acquire inspection timing; and prevent occurrence of a problem in the appliance.

There are provided an appliance determination section 13 that determines a gas appliance to be used from the quantity of momentary flow determined from a measured value of a flow measurement section 11 by predetermined arithmetic processing; an appliance setting section 43 capable of arbitrarily inputting appliance information about a monitoring target appliance; an appliance registration section 14 that registers a monitoring target appliance in accordance with a result of determination made by the appliance determination section 13 and an

result of input performed with the appliance setting section 43; a timer section 16 that integrates and stores a time elapsed from a point in time when an appliance is registered as a monitoring target appliance in an appliance registration section 14 on a registered individual appliance basis; a communication section 41 that is connected to a monitoring center 40 with a communication line and that performs communication processing of flow information, appliance information, and the like; and a control section 15 that compares an integrated time of the timer section 16 with a preset monitoring time and outputs a signal for sending a report to a gas utility company or a user when the integrated time has exceeded the monitoring time.

EP 2 258 985 A1

*FIG. 5*

**Description**

**Technical Field**

The present invention relates to an appliance management system that performs ascertainment of operating condition of an appliance and a gas supply line, monitoring of an installed condition of an appliance, and security processing, and the like, by use of a gas meter that measures a quantity of gas flow installed in a house, as well as to a gas supply system.

**Background Art**

A gas supply system is a system by which a gas company, a propane gas utility company, and the like, charges users gas bills in accordance with the quantity of gas supply consumed. In order to prevent an accident, which would otherwise arise as a result of a user forgetting to shut off gas or by a leakage of gas during use of an appliance, there is now becoming pervasive a system in which a center, and the like, that manages locates where gas is used, such as users' homes, and gas supply lines sends a report under abnormal conditions and cuts off a gas supply line.

Maintenance service, such as periodic inspection of gas appliances, has hitherto been periodically performed by employees of a gas company or a propane gas utility company directly visiting gas users' houses. Further, a related-art gas appliance management system monitors a state of safe use of gas through a network. When a gas meter or an alarm has detected an anomaly, a detection result is transmitted to an information terminal with a wireless communication unit, thereby sending a report to a control center or the user from the information terminal (see; for instance, Patent Document 1).

Another apparatus specifies appliances to be used at home by an appliance determination function having a built-in gas meter and individually monitors timing of inspection and replacement.

A related-art monitoring apparatus of this type has a flow measurement unit that produces a signal in accordance with the quantity of gas passing through a gas meter positioned in a gas supply line; an individual gas appliance flow computing unit that calculates the amount of flow change in the quantity of gas passing through a gas meter in response to a signal from the flow measurement unit and that classifies the quantity of gas on an individual gas appliance basis; a sensor unit that acquires an input signal other than the amount of flow change; for instance, an outdoor temperature, calendar information, and information about an operation start time; and a composite computing unit that combines information acquired from the individual gas appliance flow computing unit with information from the sensor unit, to thus determine a gas appliance being used (see; for instance, Patent Document 2). Another monitoring apparatus has sound emission units that are provided in gas passageways of respective gas appliances and that produce monitoring sound of a predetermined frequency compliant with individual gas appliances and at sound levels proportional to the quantity of gas flow and a monitoring unit that monitors operating conditions of individual gas appliances in accordance with the monitoring sounds produced by the sound emission units (see; for instance, Patent Document 3).

However, the related art system of Patent Document 1, or the like, solely checks whether or not safety is achieved and cannot monitor in real time conditions of usage of gas including operating conditions of gas appliances. In a related-art membrane type gas meter that integrates the quantity of flowing gas on a predetermined flow basis, integration involves consumption of much time when an attempt is made to check leakage of a minute quantity of flow and hence cannot momentarily check gas leakage. When a gas pressure is measured, an operator needs to visit the user's home and perform operation, such as close of all gas valves, which involves consumption of efforts. Further, checking stoppage of gas involves of consumption of time, the operator cannot immediately perform checking work. Moreover, it has recently been made mandatory to periodically inspect an oil fan heater, a bathroom heater, and the like, as well as gas appliances. However, a system that manages target appliances in a centralized manner has never been available.

The related-art system of Patent Document 1, and the like, has performed processing for determining shutoff of gas and emission of an alarm by use of a flow value, an integrated flow value, and an operating time of gas. However, the system neither have any units for exhibiting to the gas user progression of the quantity of gas consumption and proposing promotion of replacement purchase of highly-efficient equipment nor a function by which a gas utility company easily integrates quantities of consumed gas in a district covered by the supplier. Therefore, energy management for curtailing the quantity of gas consumption in order to reduce the quantity of $CO_2$ cannot be performed.

According to Patent Document 1, it has been unable to perform appliance management, such as reporting of an appropriate inspection timing while a cumulative operating time of an appliance is monitored.

The appliance monitoring apparatus disclosed in Patent Documents 2 and 3 needs a gas appliance determination unit requiring a complex control circuit. In particularly, in Patent Document 2, an individual gas appliance flow computing unit is provided for classifying the quantity of gas into quantities of gas of individual gas appliances in accordance with the amount of flow change in gas passing through a gas meter. Further, information from various sensors for specifying a working environment is combined, to thus estimate an operating gas appliance. Despite a necessity of a complex circuit configuration, a problem still exists in the certainty of specification of an operating gas appliance.

The appliance monitoring apparatus of Patent Document 3 generates monitoring sound at a frequency proportional to the quantity of gas flowing through each of gas appliances and specifies an operating gas appliance by collecting the monitoring sound. Therefore, an attempt can be made to enhance certainty in terms of specification of an operating gas appliance in accordance with information emitted from an individual gas appliance. However, a whistling device that generates sound proportional to the quantity of flow, a microphone collecting sound, and an analyzing circuit are required, and the apparatus has a drawback in connection with a necessity for an extremely-complex circuit configuration.

Moreover, appliances taking oil or electricity as energy other than the gas appliances recently tend to encounter an increase in the number of durability-related accidents, and a necessity for periodic inspection is revamped. Under such circumstances, a realistic problem is that a system for reporting appropriate inspection timing from the view point of durability performance which varies from one appliance to another has not yet been established.

Patent Document 1: JP-A-2002-262367
Patent Document 2: JP-A-3-236513
Patent Document 3: JP-A-8-178195

**Disclosure of the Invention**

**Problem that the Invention is to solve**

The present invention has been conceived in view of the circumstance and aims at providing an appliance management system that can immediately check conditions of usage of gas all the time or at predetermined timing in various situations, such as situations that a gas appliance is used or not used. The present invention also provides an appliance management system that registers various types of appliances requiring periodic inspection and integrates a time elapsed from registration of each of the appliances, thereby reliably performing periodic inspection of the appliances and preventing a user from encountering an accident of the appliance. Further, the present invention provides an appliance management system that can automatically send a report to an inspection service provider or a user, thereby enabling enhancement of safety and convenience of an appliance in terms of usage.

The present invention also provides a gas supply system that enables ascertainment of progression of the quantity of gas consumption on an individual consumer basis and that makes it possible to reform user's consciousness and promote replacement purchase of a highly-efficient appliance by indication of the progression to a gas user, thereby enabling a reduction in the quantity of gas consumption and the quantity of generation of $CO_2$.

The present invention also provides an appliance management system that can specify a gas appliance to be used at home and an appliance other than that by means of built-in appliance determination function of a gas meter; that can monitor a cumulative operating time on the thus-specified individual appliance basis; and that can appropriately report inspection timing or exchange/replacement purchase timing.

**Means for Solving the Problem**

An appliance management system of the present invention has a gas appliance determination unit for determining the type of a gas appliance from gas flow information; an appliance setting unit that enables arbitrary input of information about an appliance other than a gas appliance with an input unit; a monitoring target appliance registration unit that specifies and registers a monitoring target appliance from a result of determination made by the gas appliance determination unit and/or setting information from the appliance setting unit; an individual-appliance-basis elapsed time storage unit that clocks a time elapsed from a point in time when a monitoring target appliance is registered in the monitoring target appliance registration unit on a registered individual appliance basis and stores the clocked time; an individual-appliance-basis check time storage unit that stores an inspection time or life time on a registered individual appliance basis; a monitoring determination unit that outputs a report signal when a value stored on an individual registered appliance basis in the individual-appliance-basis elapsed time storage unit exceeds a value stored in the individual-appliance-basis check time storage unit; and a communication unit that establishes communication of information with a monitoring center or a customer indicator.

According to the present invention, it is possible to determine the types of all appliances used at home; for instance, gas appliances and appliances taking oil and electricity as energy, by use of a gas appliance determination unit and an appliance setting unit. In particular, an appliance requiring monitoring is registered in a monitoring target appliance registration unit, whereby a subsequently-elapsed time can be monitored on an individual registered appliance basis. A report is automatically sent at a point in time when preset inspection timing is achieved or when replacement timing is achieved at the end of life, or the like, whereby preliminary inspection work can be performed to the extreme extent, and a durability-related problem can be resolved.

An appliance management system of the present invention also includes a flow measurement section that measures at a predetermined period a quantity of gas flow connected to a gas supply pipe; an appliance determination section that determines a gas appliance to be used from a previously-specified flow change characteristic on the basis of a quantity of momentary flow determined from a measured value of the flow measurement section through predetermined arithmetic processing; an appliance setting section that enables manual input of appliance information about a monitoring target appliance; an appliance registration section that selects and registers a predetermined monitoring target appliance in accordance with a result of determination made by the appliance determination section and/or a result of input performed with the appliance setting section; a timer section that integrates, on a registered individual appliance basis, a time elapsed from a point in time when an appliance is registered as a monitoring target appliance in the appliance registration section and that stores the integrated time; a communication section that is connected to a monitoring center with a communication line and that performs processing of communication of flow information, appliance information, and the like; and a control section that compares the time integrated by the timer section with a preset monitoring time and that outputs a signal for sending a report to a gas utility company or a user when the integrated time has exceeded the monitoring time.

According to the present invention, in relation to units for specifying a monitoring target appliance among appliances used at home, in the case of a gas appliance, a preset monitoring target appliance is selected and registered in accordance with a result of determination performed by an appliance determination section that performs determination processing on the basis of a result of measurement performed by a flow measurement section built in a gas meter. In the case of an appliance other than a gas appliance; for instance, an appliance taking electricity or oil as energy, information about a monitoring target appliance is registered directly by an appliance setting section that allows performance of arbitrary manual input operation, and the thus-registered information is stored in the appliance registration section. When a new monitoring target appliance is added, the information stored in the appliance registration section is updated in accordance with a result of determination made by the appliance determination section and a result of input performed with the appliance setting section. A time elapsed from a point in time when an appliance is registered in the appliance registration section or when the information is updated is clocked. A resultantly-integrated time is managed according to an individual monitoring target appliance stored in the appliance registration section, and a report is sent when the integrated time has reached a predetermined value. Therefore, it is possible to reliably acquire in real time information about the type of an appliance used at home, a cumulative time elapsed from installation of an appliance, and the like.

Acquired individual-appliance-basis installation information is compared with a value stored in the control section that stores inspection timing or replacement timing, which vary from one type of an appliance to another type of an appliance, on an individual appliance basis or an individual component basis, whereby an appropriate inspection time can be ascertained. Inspection timing arrival information can be reported to the outside, such as a monitoring center. Therefore, preliminary inspection work can be performed to an extreme extent, and a durability-related problem can be resolved.

Further, a gas supply system of the present invention includes a flow measurement section that is connected to a gas supply pipe and that measures a quantity of gas consumption; a communication section that sends a communication of a measured quantity of gas consumption to a gas utility company; an integration section that integrates a quantity of gas consumption in a predetermined period for each gas consumer; a conversion section that converts the quantity of gas consumption into an amount of $CO_2$ emissions; a comparison section that compares an amount of $CO_2$ emissions acquired in a previous predetermined period with an amount of $CO_2$ emissions acquired in a current predetermined period or that compares a quantity of gas consumption in a previous predetermined period with a quantity of gas consumption in a current predetermined period; and a feedback section that reports to a gas user a result of a comparison between the amount of $CO_2$ emissions acquired in a previous predetermined period with the amount of $CO_2$ emissions acquired in a current predetermined period performed by the comparison section or a comparison between the quantity of gas consumption in a previous predetermined period with the quantity of gas consumption in a current predetermined period performed by the comparison section.

According to the invention, the gas utility company can ascertain a transition in the quantity of gas consumption on a per-consumer basis. Reform of consumer's consciousness and promotion of replacement purchase of an appliance to a highly-efficient appliance by submitting the transition to the gas consumer are attained, whereby the quantity of gas consumption and the quantity of $CO_2$ emissions can be curtailed.

Moreover, an appliance management system of the present invention is an appliance management system that monitors conditions of usage of a gas appliance connected to a pipe passed through a gas meter and that can receive information from another appliance, wherein the gas meter includes a flow measurement unit for measuring a quantity of gas flow, a shutoff valve that cuts off a gas passageway in case of occurrence of an anomaly, a control circuit that performs predetermined processing in accordance with a result of measurement performed by the flow measurement unit and that outputs flow information, a receiving unit that receives operating information, and the like, from another appliance, and a communication unit that transmits and receives information to and from an external party; the other appliance has an appliance information transmission unit that transmits operating information including a code for identifying an appliance and a signal pertaining to a period from start to stoppage of operation; and the control circuit has a first appliance operating time monitoring unit that manages a cumulative value of an operating time for each working gas appliance in response to a result of process for determining a working gas appliance on the basis of a flow measurement result, a second appliance operating time monitoring unit that manages a cumulative value of an operating time of an individual appliance other than a gas appliance in response to operating information from the appliance information transmission unit, and an individual-appliance-basis inspection time storage unit that stores, on an individual appliance basis, a time when inspection or replacement is required; and inspection time arrival information is transmitted to the outside by use of the communication unit when a cumulative value of the operating time monitored by the first individual-appliance-basis operating time monitoring unit and the second individual-appliance-basis operating time monitoring unit has reached a value stored in the individual-appliance-basis inspection time storage unit.

According to the present invention, individual-appliance-basis operating information about a gas appliance can be acquired by use of an appliance determination function built in a gas meter by which determination processing is performed on the basis of a result of flow measurement, and operating information for an individual appliance other than a gas appliance can be acquired from individual-appliance-basis operating information transmitted from another appliance by a receiving unit built in the gas meter. Therefore, it is possible to reliably acquire in real time information about the type of an appliance used at home, a cumulative operating time, and the like.

Acquired individual-appliance-basis operating information is compared with a value stored in the individual-appliance-basis inspection time storage unit that stores inspection timing or replacement timing, which vary from one type of an appliance to another type of an appliance, on an individual appliance basis or an individual component basis, whereby an appropriate inspection time can be ascertained. Inspection timing arrival information can be reported to the outside, such as a monitoring center. Therefore, preliminary inspection work can be performed to an extreme extent, and a durability-related problem can be resolved.

## Advantages of the Invention

An appliance management system of the present invention makes it possible to reliably acquire in real time information about the type of an appliance used at home, a cumulative time elapsed from installation of an appliance, and the like.

Acquired individual-appliance-basis installation information is compared with a value stored in the control section that stores inspection timing or replacement timing, which vary from one type of an appliance to another type of an appliance, on an individual appliance basis or an individual component basis, whereby an appropriate inspection time can be ascertained. Inspection timing arrival information can be reported to the outside, such as a monitoring center. Therefore, preliminary inspection work can be performed to an extreme extent, and a durability-related problem can be resolved.

Further, the gas utility company can ascertain a transition in the quantity of gas consumption on a per-consumer basis. Reform of consumer's consciousness and promotion of replacement purchase of an appliance to a highly-efficient appliance are attained by submitting the transition to the gas consumer, whereby the quantity of gas consumption and the quantity of $CO_2$ emissions can be curtailed. Further, curtailing of $CO_2$ emissions can be accelerated.

A gas appliance used at home and an appliance other than the gas appliance are specified by means of an appliance determination function incorporated in a gas meter, and a cumulative value of an operating time is monitored on a specified individual appliance basis, thereby enabling appropriate reporting of inspection or replacement timing or replacement purchase timing. Therefore, preliminary inspection work can be performed to an extreme extent, and a durability-related problem can be resolved.

## Brief Description of the Drawings

[Fig. 1] It is a structural block diagram of an appliance management system of a first embodiment of the present invention.
[Fig. 2] It is a structural block diagram of an appliance management system of a second embodiment of the present invention.
[Fig. 3] It is a general schematic view of an ultrasonic flowmeter of the appliance management system.
[Fig. 4] It is an operation flowchart of the appliance management system pertaining to a determination about an appliance.
[Fig. 5] It is a structural block diagram of an appliance management system of another embodiment of the present invention.

[Fig. 6] It is a structural block diagram of an appliance management system of the other embodiment of the present invention.

[Fig. 7] It is a structural block diagram of an appliance management system of the other embodiment of the present invention.

[Fig. 8] It is a structural block diagram of an appliance management system of the other embodiment of the present invention.

[Fig. 9] It is a structural block diagram of a gas supply system of a third embodiment of the present invention.

[Fig. 10] It is a structural block diagram of a gas supply system of a fourth embodiment of the present invention.

[Fig. 11] It is a structural block diagram of a gas supply system of a fifth embodiment of the present invention.

[Fig. 12] It is a flowchart showing operation procedures of the gas supply system for determining an appliance.

[Fig. 13] It is a view showing a mode of an appliance monitor of sixth embodiment of the present invention for monitoring a gas appliance.

[Fig. 14] It is a view showing a mode of the appliance monitor for monitoring an appliance other than a gas appliance.

[Fig. 15] It is a schematic view of appliance information transmission unit of the appliance monitor.

[Fig. 16] It is a control block diagram of the appliance information transmission unit of the appliance monitor.

[Fig. 17] It is a view showing appearance and constituent components of a gas meter making up the appliance monitor.

[Fig. 18] It is an internal schematic view of the gas meter making up the appliance monitor.

[Fig. 19] It is a structural block diagram of a control circuit board of the gas meter making up the appliance monitor.

[Fig. 20] It is a control block diagram of a control circuit of the appliance monitor.

[Fig. 21] It is a view showing an example information stored in registration storage unit in the appliance monitor.

[Fig. 22] It is a control block diagram of an operating time monitoring unit of the appliance monitor.

**Descriptions of the Reference Numerals and Symbols**

11 ULTRASONIC FLOWMETER (FLOW MEASUREMENT SECTION)
12 FLOW COMPUTING SECTION (FLOW MEASUREMENT SECTION)
13 APPLIANCE DETERMINATION SECTION (GAS APPLIANCE DETERMINATION UNIT)
14 DETERMINATION REGISTRATION SECTION (MONITORING TARGET APPLIANCE REGISTRATION UNIT)
15 CONTROL SECTION
16 TIMER SECTION (INDIVIDUAL-APPLIANCE-BASIS ELAPSED TIME STORAGE UNIT)
40 MANAGEMENT CENTER UNIT (MONITORING CENTER)
41 COMMUNICATION SECTION (COMMUNICATION UNIT)
43 APPLIANCE SETTING SECTION (APPLIANCE SETTING UNIT)
50 INDIVIDUAL-APPLIANCE-BASIS CHECK TIME SETTING UNIT
51 MONITORING DETERMINATION UNIT
113 FLOW MEASUREMENT SECTION
140 MANAGEMENT CENTER UNIT
141 COMMUNICATION SECTION
145 INTEGRATION SECTION
146 CONVERSION SECTION
148 COMPARISON SECTION
149 FEEDBACK SECTION
202 GAS METER
202c GAS SHUTOFF VALVE
210 CONTROL CIRCUIT BOARD
210a CONTROL CIRCUIT
210f OPERATING TIME MONITORING UNIT
210g INSPECTION TIME STORAGE UNIT
211 WIRELESS MODULE
211a WIDE AREA WIRELESS COMMUNICATION MODULE (COMMUNICATION UNIT)
211b AREA WIRELESS COMMUNICATION MODULE (RECEIVING UNIT)
211d APPLIANCE WIRELESS MODULE
214 BASE STATION
217 FLOW MEASUREMENT UNIT
222 OPERATING INFORMATION ACQUISITION UNIT

226 APPLIANCE INFORMATION TRANSMISSION UNIT
227 IDENTIFICATION CODE CHANGE UNIT
233 SECOND OPERATING TIME MEASUREMENT UNIT
235 FIRST OPERATING TIME MEASUREMENT UNIT
236 INDIVIDUAL-APPLIANCE-BASIS OPERATING TIME ACCUMULATION UNIT
237 INDIVIDUAL-APPLIANCE-BASIS OPERATING TIME STORAGE UNIT
238 INDIVIDUAL-APPLIANCE-BASIS INSPECTION TIME STORAGE TABLE
239 COMPARISON UNIT
248 APPLIANCE DETERMINATION UNIT

**Best Modes for Implementing the Invention**

A first invention is an appliance management system comprising a gas appliance determination unit for determining the type of a gas appliance from gas flow information; an appliance setting unit that enables arbitrary input of information about an appliance other than a gas appliance with an input unit; a monitoring target appliance registration unit that specifies and registers a monitoring target appliance from a result of determination made by the gas appliance determination unit and/or setting information from the appliance setting unit; an individual-appliance-basis elapsed time storage unit that clocks a time elapsed from a point in time when a monitoring target appliance is registered in the monitoring target appliance registration unit on a registered individual appliance basis and stores the clocked time; an individual-appliance-basis check time storage unit that stores an inspection time or life time on a registered individual appliance basis; a monitoring determination unit that outputs a report signal when a value stored on an individual registered appliance basis in the individual-appliance-basis elapsed time storage unit exceeds a value stored in the individual-appliance-basis check time storage unit; and a communication unit that establishes communication of information with a monitoring center or a customer indicator.

It is possible to determine the types of all appliances used at home; for instance, gas appliances and appliances taking oil and electricity as energy, by use of a gas appliance determination unit and an appliance setting unit. In particular, an appliance requiring monitoring is registered in a monitoring target appliance registration unit, whereby a subsequently-elapsed time can be monitored on an individual registered appliance basis. A report is automatically sent at a point in time when preset inspection timing is achieved or when replacement timing is achieved at the end of life, or the like, whereby preliminary inspection work can be performed to the extreme extent, and a durability-related problem can be resolved.

A second invention is an appliance management system comprising a flow measurement section that measures at a predetermined period a quantity of gas flow connected to a gas supply pipe; an appliance determination section that determines a gas appliance to be used from a previously-specified flow change characteristic on the basis of a quantity of momentary flow determined from a measured value of the flow measurement section through predetermined arithmetic processing; an appliance setting section that enables manual input of appliance information about a monitoring target appliance; an appliance registration section that selects and registers a predetermined monitoring target appliance in accordance with a result of determination made by the appliance determination section and/or a result of input performed with the appliance setting section; a timer section that integrates, on a registered individual appliance basis, a time elapsed from a point in time when an appliance is registered as a monitoring target appliance in the appliance registration section and that stores the integrated time; a communication section that is connected to a monitoring center with a communication line and that performs processing of communication of flow information, appliance information, and the like; and a control section that compares the time integrated by the timer section with a preset monitoring time and that outputs a signal for sending a report to a gas utility company or a user when the integrated time has exceeded the monitoring time.

In relation to units for specifying a monitoring target appliance among appliances used at home, in the case of a gas appliance, a preset monitoring target appliance is selected and registered in accordance with a result of determination performed by an appliance determination section that performs determination processing on the basis of a result of measurement performed by a flow measurement section built in a gas meter. In the case of an appliance other than a gas appliance; for instance, an appliance taking electricity or oil as energy, information about a monitoring target appliance is registered directly by an appliance setting section that allows performance of arbitrary manual input operation, and the thus-registered information is stored in the appliance registration section. When a new monitoring target appliance is added, the information stored in the appliance registration section is updated in accordance with a result of determination made by the appliance determination section and a result of input performed with the appliance setting section. A time elapsed from a point in time when an appliance is registered in the appliance registration section or when the information is updated is clocked. A resultantly-integrated time is managed according to an individual monitoring target appliance stored in the appliance registration section, and a report is sent when the integrated time has reached a predetermined value. Therefore, it is possible to reliably acquire in real time information about the type of an appliance used at home, a cumulative time elapsed from installation of an appliance, and the like.

Acquired individual-appliance-basis installation information is compared with a value stored in the control section that stores inspection timing or replacement timing, which vary from one type of an appliance to another type of an appliance, on an individual appliance basis or an individual component basis, whereby an appropriate inspection time can be ascertained. Inspection timing arrival information can be reported to the outside, such as a monitoring center. Therefore, preliminary inspection work can be performed to an extreme extent, and a durability-related problem can be resolved.

A third invention is based on; particularly, the second invention, wherein the appliance setting section can perform registration of an appliance in the appliance registration section, alteration of the appliance, and deletion of the appliance by use of the communication section.

An appliance other than a gas appliance that cannot be identified by the quantity of gas flow and a specific appliance can be registered by the manual operation through a communication section. Further, when an appliance to be discarded has arisen, the appliance can be deleted from monitoring target appliances, and change processing to be performed when a change is made to monitoring target appliances can be performed. Performance of erroneous operation, which would otherwise be caused by mischief, and the like, can be prevented by involvement of the communication section, so that a monitoring target appliance can reliably be specified.

A fourth invention is based on; particularly, the second and third inventions, wherein the timer section is made up of an appliance timer section that measures an integrated time on a registered individual appliance basis, and the control section is arranged so as to be able to arbitrarily set, on a registered individual appliance basis, a monitoring time that is to be compared with a measured, integrated time.

A monitoring time can be set on an individual registered appliance basis, and a duration of periodic inspection and replacement timing suitable for an appliance can be set.

A fifth invention is based on; particularly, the second through fourth inventions, wherein the appliance registration section also enables registration of, other than a gas appliance, appliances that take oil and electricity as energy; imparts identification codes to respective appliances; and manages registered appliances while differentiating them from each other.

It becomes possible to select and register monitoring target appliances from all appliances used in a house, and an appliance other than a gas appliance can be managed by utilization of an appliance management system that takes the gas meter as a relay.

A sixth invention is based on; particularly, the second to fifth inventions, wherein there are provided a report destination registration section that registers a report destination on a registered individual appliance basis and a report destination selection section that selects a report destination registered in the report destination registration section.

When timing for making a report of periodic inspection, and the like, is achieved, inspection information is automatically sent to a registered report destination. Therefore, a gas appliance can send a periodic inspection report to a gas utility company; an oil appliance can send a periodic inspection report to an oil appliance distributor; and an electric product can send a periodic inspection report to an electric product retailer.

A seventh invention is directed toward a gas supply system comprising: a flow measurement section that is connected to a gas supply pipe and that measures a quantity of gas consumption; a communication section that sends a communication of a measured quantity of gas consumption to a gas utility company; an integration section that integrates a quantity of gas consumption in a predetermined period for each gas consumer; a conversion section that converts the quantity of gas consumption into an amount of $CO_2$ emissions; a comparison section that compares an amount of $CO_2$ emissions acquired in a previous predetermined period with an amount of $CO_2$ emissions acquired in a current predetermined period or that compares a quantity of gas consumption in a previous predetermined period with a quantity of gas consumption in a current predetermined period; and a feedback section that reports to a gas user a result of a comparison between the amount of $CO_2$ emissions acquired in a previous predetermined period with the amount of $CO_2$ emissions acquired in a current predetermined period performed by the comparison section or a comparison between the quantity of gas consumption in a previous predetermined period with the quantity of gas consumption in a current predetermined period performed by the comparison section.

The gas utility company can ascertain a transition in the quantity of gas consumption on a per-consumer basis. Reform of consumer's consciousness and promotion of replacement purchase of an appliance to a highly-efficient appliance by submitting the transition to the gas consumer are attained, whereby the quantity of gas consumption and the quantity of $CO_2$ emissions can be curtailed.

An eighth invention is based on; particularly, the seventh invention, there is provided a total integration section that sums quantities of supplied consumed gas by all gas consumers in a predetermined period of time.

Since it is possible to ascertain transition in the quantity of gas consumption on an individual gas supplier basis, reform of consciousness of the gas supplier and promotion of efforts to propose a highly-efficient appliance for the gas consumer become possible.

A ninth invention is based on; particularly, the seventh invention, wherein there are provided an appliance determination section that determines, on the basis of a quantity of momentary gas flow and from a flow change characteristic of a quantity of gas flow, an appliance which uses a gas flowing through the gas supply pipe; and an appliance integration section that integrates a quantity of gas consumption in a predetermined period according to an appliance determined by the appliance determination section.

By virtue of the quantity of gas consumption being clarified on a per-appliance basis, the gas user can refrain from wastefully using an appliance, whereby the quantity of gas use can be curtailed.

A tenth invention is based on; particularly, the seventh invention, there is provided a data encryption section that renders data pertaining to an integrated quantity of gas consumption unrewritable.

Since it is possible to prevent an individual gas supplier from forgoing a result of reduction of $CO_2$ with respect to its target amount of reduction, so that fraudulent trade of $CO_2$ can be prevented.

An eleventh invention is directed toward an appliance management system that monitors conditions of usage of a gas appliance connected to a pipe passed through a gas meter and that can receive information from another appliance, wherein the gas meter includes a flow measurement unit for measuring a quantity of gas flow, a shutoff valve that cuts off a gas passageway in case of occurrence of an anomaly, a control circuit that performs predetermined processing in accordance with a result of measurement performed by the flow measurement unit and that outputs flow information, a receiving unit that receives operating information, and the like, from another appliance, and a communication unit that transmits and receives information to and from an external party; the other appliance has an appliance information transmission unit that transmits operating information including a code for identifying an appliance and a signal pertaining to a period from start to stoppage of operation; and the control circuit has a first appliance operating time monitoring unit that manages a cumulative value of an operating time for each working gas appliance in response to a result of process for determining a working gas appliance on the basis of a flow measurement result, a second appliance operating time monitoring unit that manages a cumulative value of an operating time of an individual appliance other than a gas appliance in response to operating information from the appliance information transmission unit, and an individual-appliance-basis inspection time storage unit that stores, on an individual appliance basis, a time when inspection or replacement is required; and inspection time arrival information is transmitted to the outside by use of the communication unit when a cumulative value of the operating time monitored by the first individual-appliance-basis operating time monitoring unit and the second individual-appliance-basis operating time monitoring unit has reached a value stored in the individual-appliance-basis inspection time storage unit.

The individual-appliance-basis operating information about a gas appliance can be acquired by use of an appliance determination function built in a gas meter by which determination processing is performed on the basis of a result of flow measurement, and operating information for an individual appliance other than a gas appliance can be acquired from individual-appliance-basis operating information transmitted from another appliance by a receiving unit built in the gas meter. Therefore, it is possible to reliably acquire in real time information about the type of an appliance used at home, a cumulative operating time, and the like.

Acquired individual-appliance-basis operating information is compared with a value stored in the individual-appliance-basis inspection time storage unit that stores inspection timing or replacement timing, which vary from one type of an appliance to another type of an appliance, on an individual appliance basis or an individual component basis, whereby an appropriate inspection time can be ascertained. Inspection timing arrival information can be reported to the outside, such as a monitoring center. Therefore, preliminary inspection work can be performed to an extreme extent, and a durability-related problem can be resolved.

A twelfth invention is based on; particularly, the eleventh invention, wherein the appliance information transmission unit integrally houses an operating information acquisition unit capable of detecting an operating state and a wireless module that transmits operating information, to thus become able to acquire operating information about an exiting appliance as well.

An operating information acquisition unit that detects the start and stop of operation without receiving a signal from a controller of an appliance is provided as units for specifying an appliance other than a gas appliance, and a wireless module that transmits the thus-acquired operating information is integrally housed. Therefore, the operating information acquisition unit is available for an appliance that has already been installed and used. It is possible to easily acquire operating information about an appliance other than a gas appliance; for instance, an appliance taking oil and electricity as energy, without involvement of a special change operation. The information is transmitted to the gas meter, whereby appliance management using a gas meter as an information relay can be shared.

A thirteenth invention is based on; particularly, the eleventh and twelfth inventions, wherein the appliance information transmission unit has an identification code change unit that sets or changes a unique identification code for specifying an appliance.

There is provided an identification code change unit that can reliably inform which one of the appliances starts and finishes being used by imparting a unique identification code according to the type of an appliance used in the house and transmitting an operation start signal and an operation stop signal along with the identification code and that enables arbitrary changing or setting an individual-appliance-basis identification code. Therefore, even when an appliance is changed by replacement purchase, and the like, the new appliance can be addressed solely by changing an identification code. Further, reuse of the identification code is also possible. Extremely effective appliance information transmission unit can be provided.

A fourteenth invention is based on; particularly, the eleventh to thirteenth inventions, wherein the appliance information transmission unit has an operating information acquisition unit configured so as to acquire operating information by detecting a characteristic that changes when operation of an appliance is started and stopped, and an operation start signal is output when the operating information acquisition unit has detected start of operation and an operation stop signal is output when the operating information acquisition unit has detected stoppage of operation.

As a specific configuration of operating information acquisition unit, it becomes possible to detect a characteristic that changes at start and end of operation; for instance; a temperature change, a change in the amount of current, a change in a display mode, and the like, and to output an operation start signal and an operation stop signal. Moreover, example specific means is hereunder described by reference to a case where a change in the amount of current is taken as an example. It is configured to output an operation start signal upon detection of a phenomenon of occurrence of an incremental change in the amount of current flowing to an appliance and output an operation stop signal upon detection of a phenomenon of occurrence of a decremental change in the amount of current flowing to an appliance. There is configured a wireless module that converts each of the outputs into a wireless signal; that imparts an appliance identification code to the wireless signal; and that transmits the appliance identification code to a gas meter. The operating information acquisition unit and the wireless module are integrally housed into a receptacle unit to which an electric cord is connected. It is configured to supply power to an appliance with the receptacle unit. The appliance information transmission unit is usable for an appliance that is already installed and used; can simply acquire operating information about an appliance other than a gas appliance; for instance, an appliance taking oil or electricity as energy, without involvement of special change operation; and can share appliance management using a gas meter as an information relay by transmitting information to the gas meter.

A fifteenth invention is based on; particularly, the eleventh invention, wherein the first individual-appliance-basis operating time monitoring unit measures a time from when an incremental change arises in a result of measurement of a quantity of flow until when a decremental change arises in the result of measurement of the quantity of flow and takes the time as an operating time of an appliance, accumulates the operating time in correspondence with a simultaneously-determined working gas appliance, and monitors an operating time of an individual gas appliance.

An operating time monitoring unit of a gas appliance and an operating time monitoring unit of an appliance other than the gas appliance are distinguished from each other. In the case of a gas appliance, operating time is monitored by use of a first individual-appliance-basis operating time monitoring unit. A gas appliance being used is specified by performing predetermined determination processing in accordance with a result of flow measurement performed by a flow measurement unit built in a gas meter. Concurrently, a duration of time from when an incremental change arises in the quantity of flow until when a decremental change arises in the quantity of flow is measured, and the thus-measured time is taken as an operating time of an appliance. The operating time is accumulated in correspondence with the specified gas appliance. The thus-accumulated operating time is compared with preset inspection timing or replacement timing, whereby an appropriate inspection time can be checked on an individual gas appliance basis.

Sixteenth invention is based on; particularly, the eleventh invention, wherein the second individual-appliance-basis operating time monitoring unit starts counting operation by an appliance identification code and operation start information including an operation start signal that are transmitted from the appliance information transmission unit and stops counting operation by the appliance identification code and operation stop information including an operation stop signal; accumulates the count value in correspondence with the appliance identification code; and monitors an operating time of an individual appliance other than a gas appliance.

An operating time monitoring unit of a gas appliance and an operating time monitoring unit of an appliance other than the gas appliance are distinguished from each other. In the case of an appliance other than a gas appliance, operating time is monitored by use of a second individual-appliance-basis operating time monitoring unit. By use of a receiving unit built in a gas meter, operating time is counted by an appliance identification code transmitted from an appliance other than a gas appliance and operation start information including an operation start signal. Counting of the operating time is stopped by an appliance identification code transmitted after elapse of a predetermined time and operation stop information including an operation stop signal. A count value achieved in a duration from the start of counting operation until the end of counting operation is accumulated in correspondence with an individual appliance identification code. The thus-accumulated count value is compared with preset inspection timing or replacement timing, so that an appropriate inspection time can be achieved on an individual gas appliance basis.

A seventeenth invention is based on; particularly, the eleventh invention, wherein the individual-appliance-basis inspection time storage unit stores inspection timing or replacement timing, which varies according to a type of an appliance, in the form of an operating time table with a plurality of columns in which the timing is set on an individual appliance basis or an individual component basis; and performs monitoring operation by use of an operating time table conforming to preset conditions.

Since there is provided an operating time table in which appropriate inspection or replacement timing, which varies according to the type of an appliance or on an individual component basis, is provided in a plurality of columns. Inspection timing for an appliance requiring checking durability and a specific component can appropriately be reported. Moreover, an operating time table is changed in correspondence with the duration of an operating time, the number of inspection operations, and preset conditions, and hence, accurate reporting of inspection timing conforming to a use environment can be sent.

Embodiments of the present invention will be described below by reference to the drawings. The present invention shall not be restricted by the embodiments.

(First Embodiment)

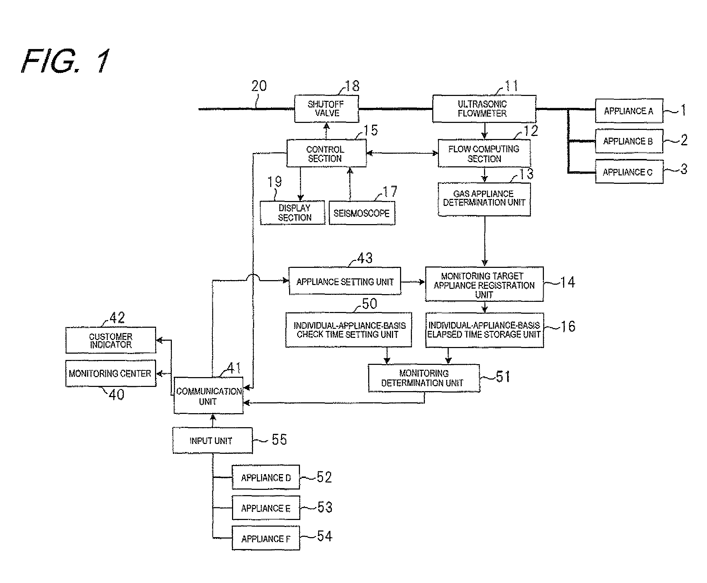

Fig. 1 is a structural block diagram of an apparatus management system of a first embodiment of the present invention.

An appliance A, an appliance B, and an appliance C are installed at home, wherein the appliances are connected to pipes extending from a flow measurement section made up of an ultrasonic flowmeter 11 connected to a gas supply pipe 20 of a gas supply line and take supplied gas as energy. The ultrasonic flowmeter 11 detects the quantity of gas that flow during use of the gas appliances.

The ultrasonic flowmeter 11 is connected to a path of the gas supply pipe 20 and is for determining a propagation time difference caused by gas flow in the gas supply pipe 20 by use of an ultrasonic signal, to thus determine a quantity of momentary flow. A flow computing section 12 performs various arithmetic operations pertaining to the quantity of flow, such as operation for computing a flow value from a detected quantity of momentary flow by averaging the quantity of momentary flow; operation for integrating a quantity of momentary flow, to thus calculate an integrated flow value; and operation for calculating a flow value used for determining an appliance.

Detailed descriptions about the operation of the ultrasonic flowmeter 11, the operation of the flow computing section 12, and a gas appliance determination unit will be provided later in connection with a second embodiment.

A gas appliance determination unit 13 determines a working gas appliance from flow information acquired by subjecting the quantity of momentary flow determined by the flow computing section 12 to predetermined processing.

Required appliance information; for instance, individual-appliance-basis information, individual-function-basis information, individual-capability-basis information, individual-manufacturer-basis information, and the like, is input from the input unit 55 as appliance information with; for instance, a communication unit 41, to an appliance setting section 43 serving as means for determining the type of, other than the gas appliances, an appliance D52, an appliance E53, an appliance F54, and the like, that take electricity or oil as energy.

A preset monitoring target appliance is selected from the thus-determined gas appliances and the other appliances, and the thus-selected target appliance is registered in a monitoring target appliance registration unit 14. By registration processing, the appliance is thereafter stored as an appliance to be monitored in the house. Simultaneously, an individual-appliance-basis elapsed time storage unit 16 clocks a time elapsed from a time when an appliance is set and stores the time according to a registered appliance.

A value of the thus-stored individual-appliance-basis elapsed time is compared with a value stored in individual-appliance-basis check time setting unit 50 that stores an inspection time and a replacement time that have previously been determined on an individual appliance basis. When the value of the stored elapsed time has exceeded the value stored in the individual-appliance-basis check time setting unit 50, a monitoring determination unit 51 sends a report to a monitoring center 40 and a customer indicator 42 by use of a communication unit 41, thereby appealing to the gas utility company or the user for a necessity for inspection or the arrival of replacement timing.

As mentioned above, it is possible to determine the types of all appliances used in the house; for instance, a gas appliance and an appliance that takes oil or electricity as energy, by use of the gas appliance determination unit 13 and the appliance setting unit 43. In particular, an appliance requiring monitoring is registered in the monitoring target appliance registration unit 14, whereby a time elapsed since registration can be monitored according to a registered appliance. Preliminary inspection work can be performed to the last extremity by automatically sending a report at preset inspection timing or at a point in time when replacement timing is achieved as a result of ending of the life cycle of the appliance, and the like, so that a durability-related problem can be prevented.

(Second Embodiment)

A second embodiment of the present invention will now be described. The second embodiment is **characterized in that** the principal constituent elements of the first embodiment are incorporated in a gas shutoff apparatus that is a customer's home unit.

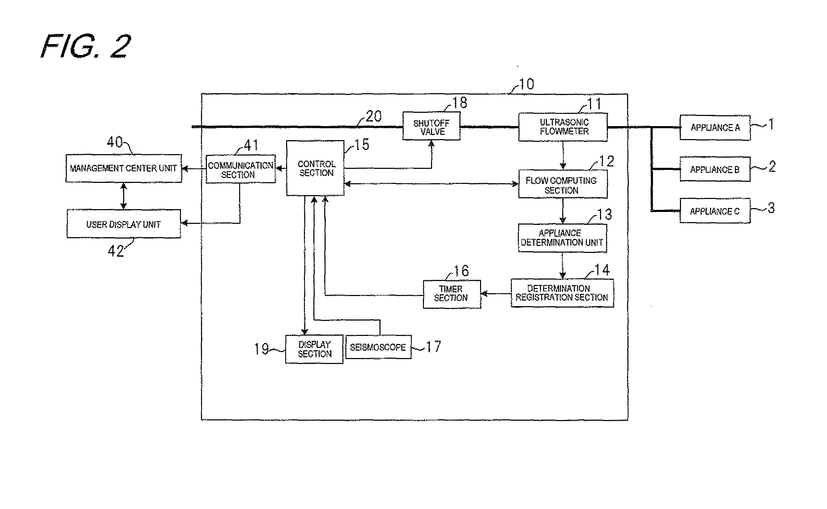

Fig. 2 is a view showing an appliance management system primarily built from a gas appliance of the second embodiment.

In the drawing, the system is made up of the management center unit (a monitoring center) 40 that manages a gas supply line including the gas supply pipe 20 and a user's home unit 10 installed in a house of a gas user, and the like. The management center apparatus 40 and the user's home unit 10 are connected to each other with the communication section 41 (communication unit), such as a public phone line, a portable phone line, an optical communication line, a wired/wireless LAN, wide area radio transmission, relayed wireless transmission, another communication interface, and others; and can exchange various signals and information.

The user display unit (customer indicator) 42 by which the user checks conditions of usage from the outside is connected to the communication section 41, and various signals and information can exchange between the management center unit 40 and the user indicator 42.

The user's home unit 10 is placed at an arbitrary position on the gas supply pipe 20 laid in the user's house, and the like. An appliance A1, an appliance B2, and an appliance C3 are connected, as a plurality of gas appliances, to downstream positions of the gas supply pipe 20. The user's home unit 10 is installed at an arbitrary outdoor or indoor location. The number of gas appliances to be connected is not limited to an illustrated example and arbitrary. The user's home includes apartment houses, shops, factories, and other facilities, as well as including ordinary houses.

The gas shutoff apparatus built from the user's home unit 10 has the ultrasonic flowmeter 11, the flow computing section 12, the appliance determination section (gas appliance determination unit) 13, the determination registration section (monitoring target appliance registration unit) 14, a control section 15, a timer section (individual-appliance-basis elapsed time storage unit) 16, a seismoscope 17, a shutoff valve 18, and a display section 19.

The ultrasonic flowmeter 11 is connected to a path of the gas supply line 20 and is for determining a propagation time difference caused by gas flow in the gas supply pipe 20 by use of an ultrasonic signal, to thus determine a quantity of momentary flow. The flow computing section 12 performs various arithmetic operations pertaining to the quantity of flow, such as operation for computing a flow value from a detected quantity of momentary flow by averaging the quantity of momentary flow; operation for integrating a quantity of momentary flow, to thus calculate an integrated flow value; and operation for calculating a flow value used for determining an appliance.

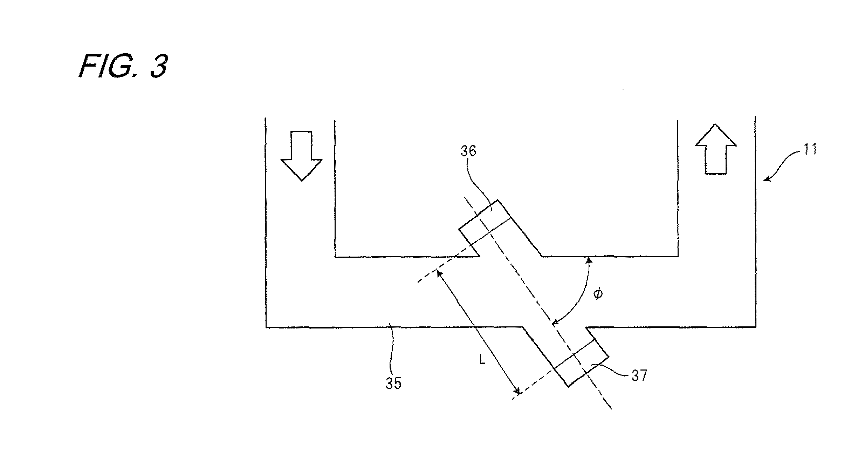

The operation of the ultrasonic flowmeter 11 and the operation of the flow computing section 12 are now described in detail. Fig. 3 is a block diagram showing the general configuration of the ultrasonic flowmeter 11.

The ultrasonic flowmeter 11 has a measurement passageway 35 that is in mutual communication with the gas supply line 20 and that assumes a rectangular cross section. A pair of ultrasonic transceivers 36 and 37 are placed at an upstream position and a downstream position on mutually-opposing passageway walls of the measurement passageway 35. The ultrasonic transceivers 36 and 37 are set in such a way that an ultrasonic wave propagation path obliquely crosses a gas flow moving through the measurement passageway 35. An ultrasonic wave is caused to propagate in a forward direction and a reverse direction with respect to the gas flow by alternatively transmitting or receiving an ultrasonic wave.

At this time, provided that a distance between the ultrasonic transceivers 36 and 37; namely, a measurement distance, is taken as L; that an angle of the ultrasonic wave propagation path achieved with respect to the gas flow is taken as $\phi$; a time during which an ultrasonic wave propagates from an upstream position to a downstream position between the ultrasonic transceivers 36 and 37 is taken as t1; that a time during which the ultrasonic wave propagates from the downstream position to the upstream position is taken as t2; and sound velocity is taken as C, a flow speed V is determined by the following equation.

$$V = L/2\cos\phi\{(1/t1)-(1/t2)\} \ \ldots \ (1)$$

The quantity of momentary gas flow is calculated from the flow speed V and a cross-sectional area of the measurement passageway 35.

A time interval at which the quantity of momentary flow is measured can be set within a range in which an ultrasonic wave can be transmitted and received. Each gas appliance has a different start time and a different period of time during which a change is induced by control. For these reasons, rendering a measurement time interval small is advantageous in view of momentary identification of an appliance. However, shortening a measurement time interval leads to greater battery consumption.

When the measurement time interval comes to seconds of double-digit intervals equal to a measurement time interval of a membrane method employed in a related-art gas meter, it becomes difficult to determine a flow change. Accordingly, in the embodiment, a gas appliance is determined by periodically measuring the quantity of momentary flow at an interval of two seconds. It is also possible to further shorten the measurement time interval. For instance, after startup of a gas appliance, there may also be performed control operation, such as operation for shortening a measurement time interval, in order to enhance measurement accuracy. The flow computing section 12 performs various arithmetic operations pertaining to the quantity of flow, such as operation for integrating the quantity of momentary flow from the detected quantity of momentary flow, to thus compute the quantity of gas flow, operation for calculating a flow value for determining an appliance to be described later, and the like.

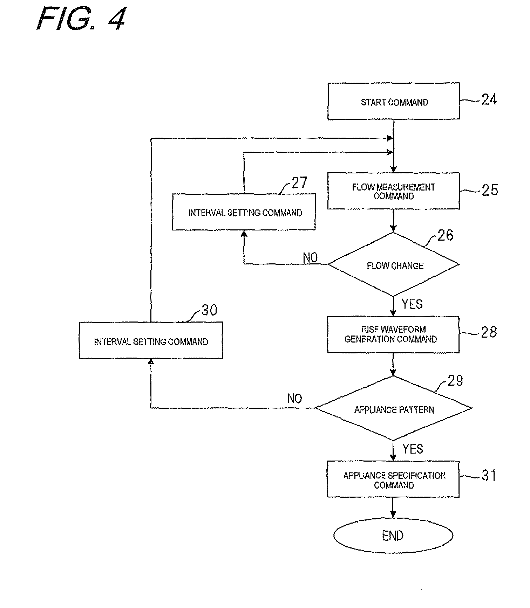

Operation of the appliance determination section 13 will now be described in detail by reference to Fig. 4.

Reference numeral 24 designates a start command; 25 designates a flow measurement command; 26 designates a flow change determination command; 27 designates an interval setting command; 28 designates a rise waveform generation command; 29 designates an appliance pattern comparison determination command; 30 designates an interval setting command; and 31 designates an appliance specification command.

A program is started by the start command 24. Previously-described ordinary flow measurement is performed by the flow measurement command 25. When any one of the appliance A1, the appliance B2, and the appliance C3 is used, a flow change arises. A path Yes is selected under the flow change determination command 26. When none of the appliance A1, the appliance B2, and the appliance C3 rise, a path No is selected. Similar operation is again repeated after elapse of a time set by the interval setting command 27. When a flow change is detected, a flow rise waveform is generated under the rise waveform generation command 28. The flow rise waveform is compared with a previously registered rise pattern under the appliance pattern comparison determination command 29. When a match exists, a working appliance is specified by the appliance specification command 31. In contrast, when no match exists, the flow change is attributable to another factor; hence, a flow No is selected. After elapse of a time set by the interval setting command 27, the foregoing operations are again iterated.

The determination registration section 14 has a function of an appliance registration section and is for registering an appliance determined from the flow value, the integrated flow value, and a flow integration time and by the appliance determination section 13.

A timer section 16 integrates a time elapsed from a point in time when the determination registration section 14 has registered the appliance.

A control section 15 has a safety processing function and controls operation of respective sections of the gas shutoff apparatus, establishes communication, and performs safety processing, such as alarming and gas shutdown.

The flow computing section 12, the appliance determination section 13, the determination registration section 14, and the control section 15 are built from an operating program making up a microcomputer, and the like, and an operation program. The processor executes a predetermined operation program to perform corresponding processing, thereby implementing respective functions. Further, the determination registration section 14 is made up of memory, such as flash ROM and RAM.

The seismoscope 17 detects vibrations, such as an earthquake, and outputs a detection signal to the control section 15. The shutoff valve 18 is connected to the path of the gas supply pipe 20 and cuts off a gas supply by closing the gas supply pipe 20 under a command from the control section 15.

The display section 19 is made up of an LED, a liquid-crystal display, and the like, and displays the quantity of gas flow and an operating state, an alarm, and the like, of a gas appliance.

As mentioned above, in relation to units for specifying a monitoring target appliance among appliances used at home, when the type of a gas appliance is specified, a monitoring target apparatus preliminary determined from a result of determination made by the appliance determination section 13 that performs determination processing in accordance with a result of measurement performed by use of the ultrasonic flowmeter 11 and the flow computing section 12, which make up a built-in flow measurement section in the gas shutoff apparatus, is selected and registered in the determination registration section 14.

The timer section 16 starts counting an elapsed time at a point in time when registration of the target in the determination registration section 14 is completed, and the control section 15 compares an integrated time of the count value with a previously-determined monitoring time. When the integrated time has exceeded the monitoring time, a signal for making a report is output to the gas utility company or the user, whereby individual-appliance-basis monitoring of the gas appliance is performed.

(Modifications)

Several modifications of the embodiment are provided below.

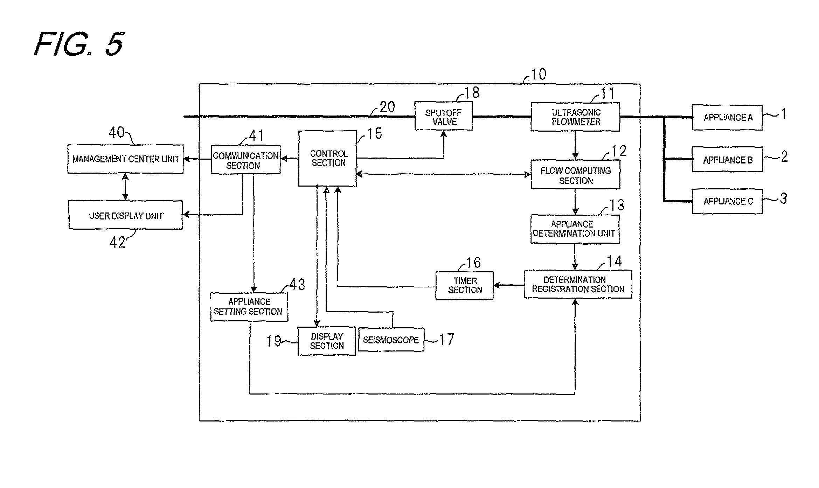

As shown in Fig. 5, a first modification is based on the appliance management system. There is provided an appliance setting section 43 that allows manual input of appliance information about a monitoring target appliance. A monitoring target appliance can be registered directly on the determination registration section 14 serving as an appliance registration section, with the communication section 41. By the additional configuration, in relation to units for specifying a monitoring target appliance among appliances used at home, when an appliance taking; for instance, electricity or oil, as energy other than the gas appliance is specified, information about a monitoring target appliance is registered directly by the appliance setting section 43 that allows performance of arbitrary manual input operation, whereby the information is stored in the determination registration section 14. When a new monitoring target appliance is added, information stored in the determination registration section 14 is updated in accordance with a determination result made by the appliance determination section 13 and a result of input performed with the appliance setting section 43. A time elapsed from a point in time when information is registered in the determination registration section 14 or when information in the same is updated is clocked. An integrated time is managed for each of the monitoring target appliances stored in the determination registration section 14. A report is made when the integrated time has reached a predetermined value; hence, it is possible to reliably acquire in real time information about the type of an appliance used at home, an integrated time achieved since installation of an appliance, and the like.

The thus-acquired individual-appliance-basis installation information is compared with a value stored in the control section 15 that stores inspection timing or replacement timing, which varies according to the type of an appliance, on an individual appliance basis or an individual component basis, whereby appropriate inspection timing can be ascertained. Further, information about arrival of inspection timing can be reported to the outside of the monitoring center 40, and the like. Therefore, preliminary inspection work can be performed to the extreme extent, and a durability-related problem can be resolved.

Moreover, an appliance and a specific appliance other than a gas appliance that cannot be identified by the quantity of gas flow can be registered through manual operation with the communication section 41. When an appliance is discarded, it is possible to perform processing for deleting the appliance from monitoring target appliances. Further, when a change is made to the monitoring target appliances, it is possible to perform change processing. Occurrence of erroneous operation, which would otherwise be caused by mischief or the like, can be prevented by involvement of the communication section 41, so that reliable specification of the monitoring target appliances becomes possible.

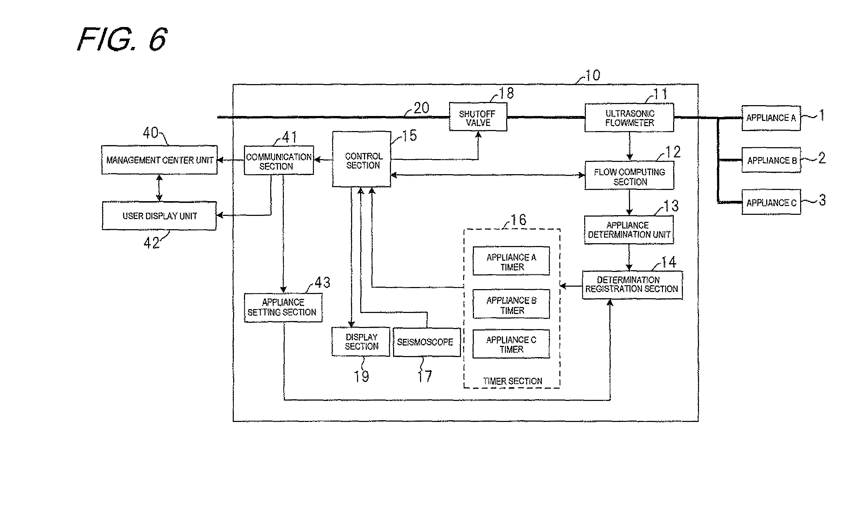

As shown in Fig. 6, a second modification is **characterized in that** a timer section has an appliance timer section 16 that measures an integrated time for each registered appliance; and that the control section 15 can arbitrarily set a monitoring time to be compared with the thus-measured integrated time for each registered appliance.

It thereby becomes possible to integrate an elapsed time for each of the plurality of appliances registered in the determination registration section 14 serving as an appliance registration section. It is possible to set a monitoring time on for each registered appliance; hence, it is possible to set a period of periodic inspection and replacement timing suitable for an appliance.

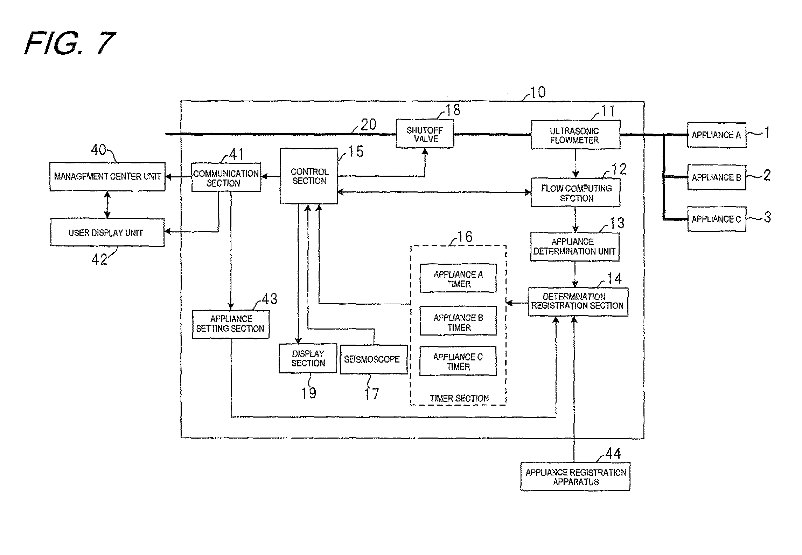

As shown in Fig. 7, in a third modification, the determination registration section 14 serving as an appliance registration section can also register other than a gas appliance an appliance that takes oil or electricity as energy. It is thereby possible for an appliance registration device 44 to impart an identification code directly to the determination registration section 14 without involvement of the communication section 41, to thus distinguish registered appliances from each other. Specific operation means of the appliance registration device 44 can be implemented by wireless transmission, activation/deactivation of a switch, infrared transmission, and the like.

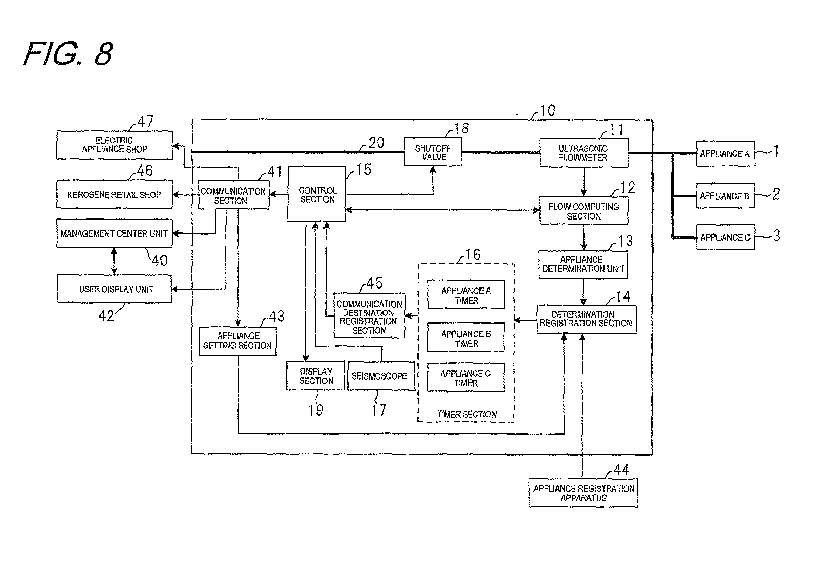

As shown in Fig. 8, in a fourth modification, a communication destination registration section 45 registers a report destination for each of the appliances registered in the determination registration section 14 serving as an appliance registration section. As a result, after elapse of a time integrated by the timer section 16, it is possible to send a report to the management center unit 41, the user display device 43, and a kerosene retailer 46, an electric appliance store 47, and the like, with the communication section 41.

(Third Embodiment)

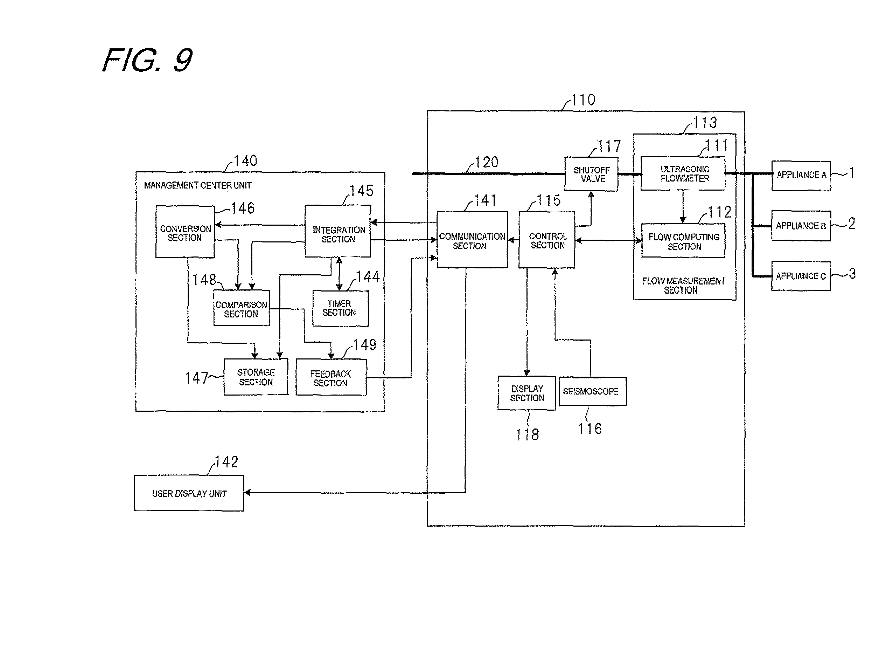

A third embodiment of the present invention is hereinbelow described by reference to Fig. 9. A gas appliance management system of a third embodiment has a management center unit 140 that manages a gas supply line including a gas supply pipe 120 and a user's home unit 110 installed in a house of a gas user, and the like. The management center unit 140 and the user's home unit 110 are connected together by a communication section 141, such as a public phone line, a portable phone line, an optical communication line, a wired or wireless LAN, wide area radio transmission, related wireless transmission, another communication interface, and the like; and can exchange various signals and information. Moreover, the communication section 141 is connected to a user display device 142 by which the user checks conditions of usage from the outside, and various signals and information can be exchanged between the management center unit 140 and the user display unit 142.

The user's home unit 110 is placed at an arbitrary position on the gas supply pipe 120 laid in the user's house, and others, and the appliance A1, the appliance B2, the appliance C3 are connected as a plurality of gas appliances to pipes located downstream of the gas pipe 120. The user's home unit 110 is installed at a predetermined outdoor or indoor position. The number of gas appliances to be connected is not limited to an illustrated example and arbitrary. The user's home includes apartment houses, shops, factories, and other facilities, as well as including ordinary houses.

The gas shutoff apparatus built from the user's home unit 110 has a flow measurement section 113 using an ultrasonic flowmeter 111 and a flow computing section 112, a control section 115, a seismoscope 116, a shutoff valve 117, and a display section 118. The ultrasonic flowmeter 111 is connected to a path of the gas supply line 120 and is for determining a propagation time difference caused by gas flow in the gas supply pipe 120 by use of an ultrasonic signal, to thus determine a quantity of momentary flow. The flow computing section 112 performs various arithmetic operations pertaining to the quantity of flow, such as operation for computing a flow value from a detected quantity of momentary flow by averaging the quantity of momentary flow; operation for integrating a quantity of momentary flow, to thus calculate an integrated flow value; and operation for calculating a flow value used for determining an appliance.

A control section 115 has a safety processing function and controls operation of respective sections of the gas shutoff apparatus, establishes communication, and performs safety processing, such as alarming and gas shutdown.

The flow computing section 112 and the control section 115 are built from a microcomputer, and the like, and an operation program. The processor executes a predetermined operation program to perform corresponding processing, thereby implementing respective functions. The seismoscope 116 detects vibrations, such as an earthquake, and outputs a detection signal to the control section 115. The shutoff valve 117 is connected to the path of the gas supply pipe 120 and cuts off a gas supply by closing the gas supply pipe 120 under a command from the control section 115.

The display section 118 is made up of an LED, a liquid-crystal display, and the like, and displays the quantity of gas flow and an operating state, an alarm, and the like, of a gas appliance.

The management center unit 140 has a timer section 144, an integration section 145, a conversion section 146, a storage section 147, a comparison section 148, and a feedback section 149. The integration section 145 integrates, in accordance with the quantity of gas consumption transmitted from the user's home unit 110, the quantity of gas consumption in a period specified by the timer section 144. The conversion section 146 computes the quantity of $CO_2$ emissions by multiplying the quantity of gas consumption by a predetermined coefficient. The storage section 147 stores the quantity of gas consumption integrated by the integration section 145 and the quantity of $CO_2$ emissions computed by the conversion section 146. The comparison section 148 compares the quantity of gas consumption integrated by the integration section 145 with the quantity of gas consumption stored in the storage section 147, as well as comparing the quantity of $CO_2$ emissions computed by the conversion section 146 with the quantity of $CO_2$ emissions stored in the storage section 147. The feedback section 149 reports a result of comparison performed by the comparison section 148 to a gas consumer. Entry of a result in a gas bill notice, indication of a result on the display section 118 of the user's home unit 110, and the like, is possible as a reporting method.

(Fourth Embodiment)

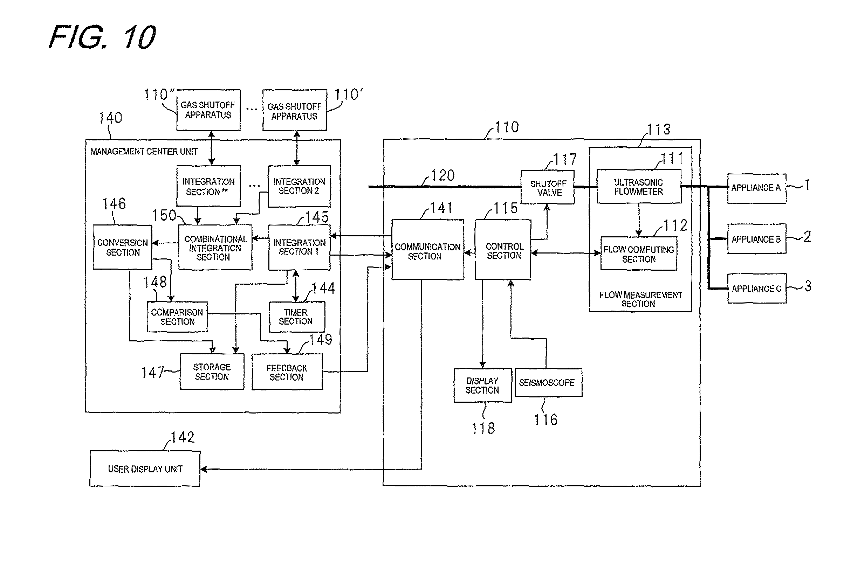

A fourth embodiment of the present invention will now be described by reference to Fig. 10. The fourth embodiment is that the management center unit 140 has a total integration section 150 that integrates the quantity of gas consumption communicated for each user's home unit (a gas shutoff apparatus) 110 in a gas supply line district. The management center unit 140 can ascertain all quantities of gas supplied from the gas utility company and consumed. By means of conversion performed by the conversion section 146, it is also possible to ascertain the quantity of $CO_2$ emissions from the quantity of gas supplied from the gas utility company.

(Fifth Embodiment)

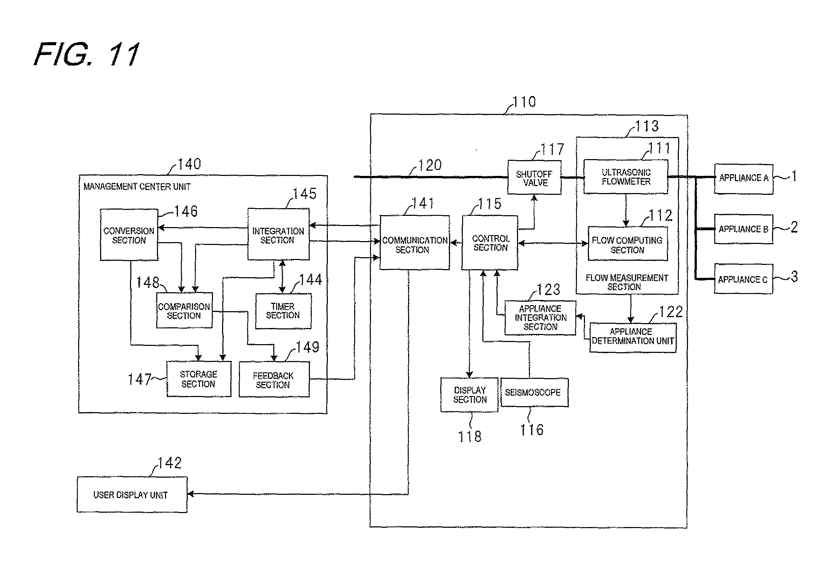

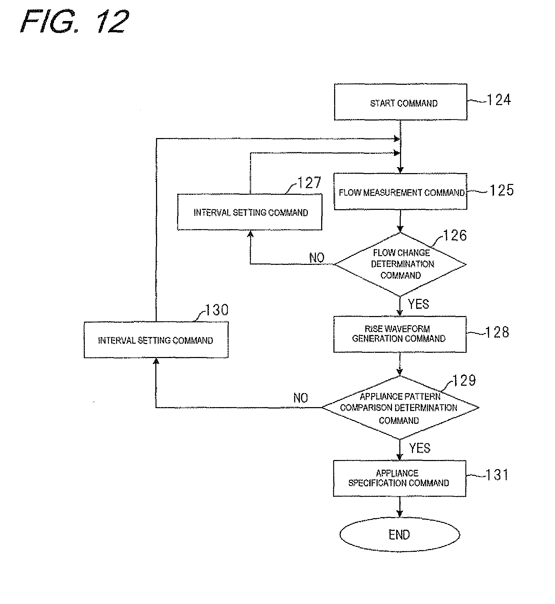

A fifth embodiment of the present invention is now described by reference to Fig. 11. The fifth embodiment is that the appliance integration section 123 integrates the quantity of gas consumption for each appliance determined by the appliance determination section 122. Operation of the appliance determination section 122 is described by reference to Fig. 12. Reference numeral 124 designates a start command; 125 designates a flow measurement command; 126 designates a flow change determination command; 127 designates an interval setting command; 128 designates a rise waveform generation command; 129 designates an appliance pattern comparison determination command; 130 designates an interval setting command; and 131 designates an appliance specification command.

A program is started by the start command 124. Previously-described ordinary flow measurement is performed by the flow measurement command 125. When any one of the appliance A1, the appliance B2, and the appliance C3 is used, a flow change arises. A path Yes is selected under the flow change determination command 126. When none of the appliance A1, the appliance B2, and the appliance C3 rise, a path No is selected. Similar operation is again repeated after elapse of a time set by the interval setting command 127. When a flow change is detected, a flow rise waveform is generated under the rise waveform generation command 128. The flow rise waveform is compared with a previously registered rise pattern under the appliance pattern comparison determination command 129. When a match exists, a working appliance is specified by the appliance specification command 131. In contrast, when no match exists, the flow change is attributable to another factor; hence, a flow No is selected. After elapse of a time set by the interval setting command 127, the foregoing operations are again iterated.

There may further be provided a data encryption section that disables rewriting of data pertaining to the integrated quantity of gas consumption, thereby encrypting the integrated quantity of gas consumption and the quantity of $CO_2$ emissions so as to make it impossible for the gas utility company and the gas consumer to alter the data.

(Sixth Embodiment)

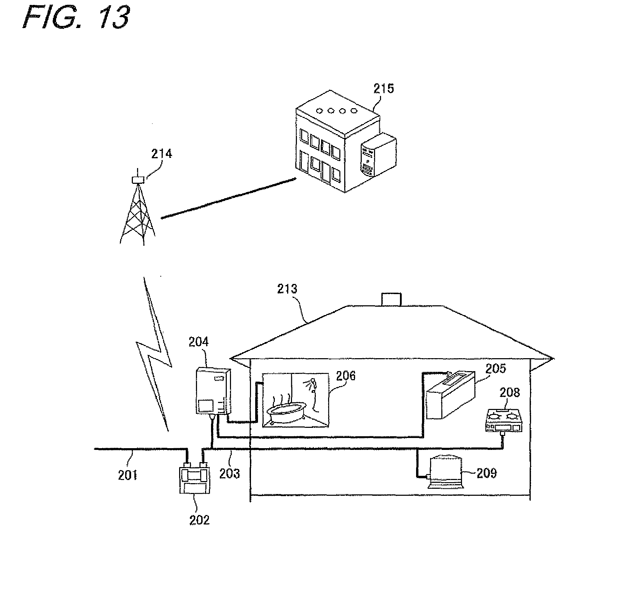

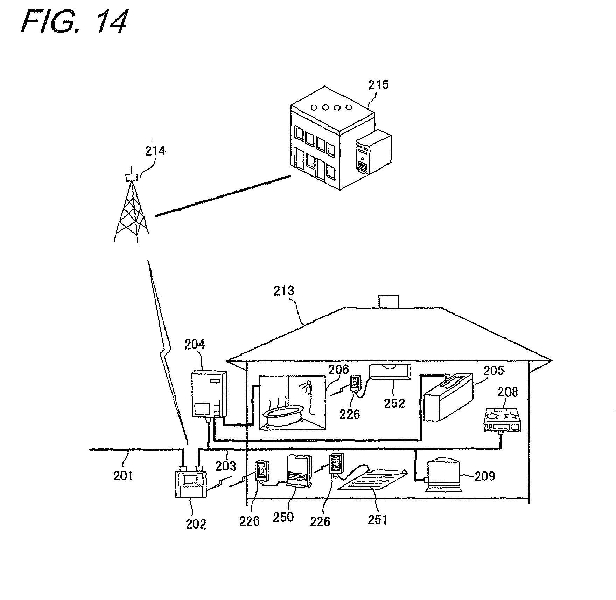

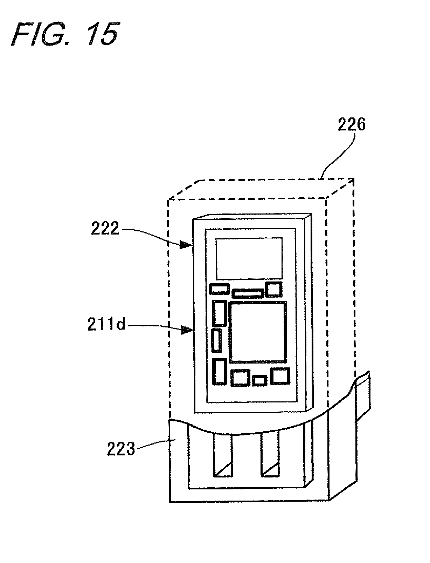

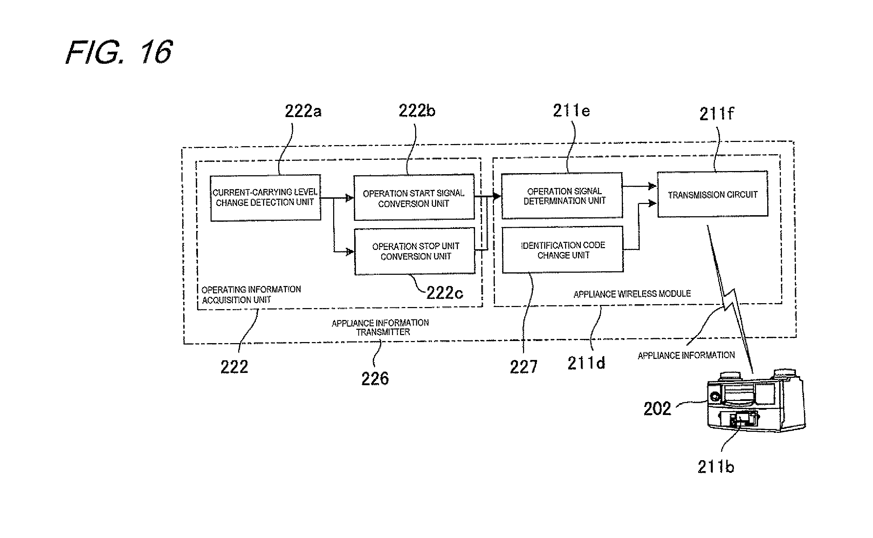

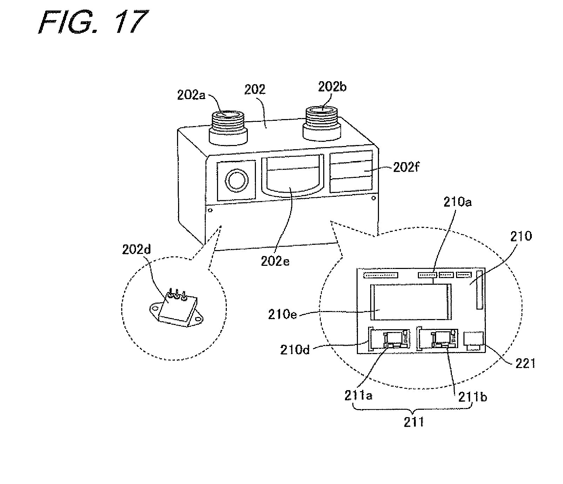

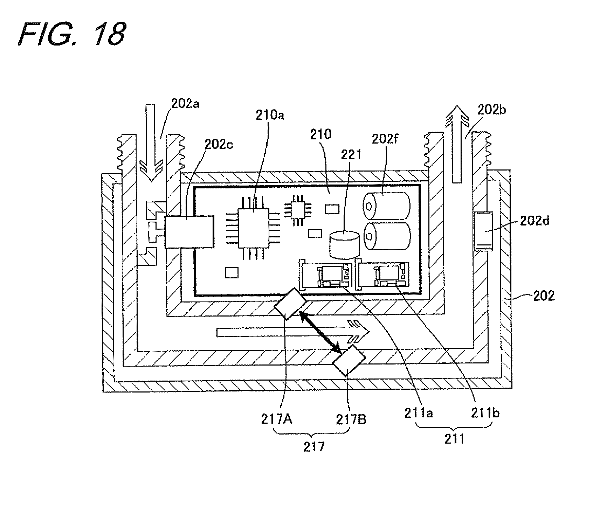

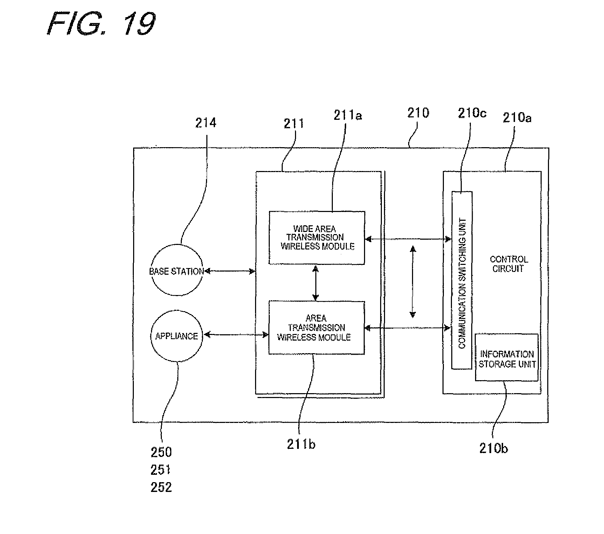

Fig. 13 is a view showing a mode of an appliance monitor using a gas meter of a sixth embodiment for monitoring a gas appliance; Fig. 14 is a view showing a mode of the appliance monitor for monitoring an appliance other than a gas appliance; Fig. 15 is a schematic view of an appliance information transmission unit of the appliance monitor; Fig. 16 is a control block diagram of the appliance information transmission unit of the appliance monitor; Fig. 17 is a view showing appearance and constituent components of a gas meter making up the appliance monitor; Fig. 18 is an internal schematic view of the gas meter making up the appliance monitor; and Fig. 19 is a structural block diagram of a control circuit board of the gas meter making up the appliance monitor.

In Fig. 13, there is first described a plurality of gas appliances connected to pipes extending from a gas meter 202 and communication function of the gas meter 202.

The gas meter 202 is installed at an entrance of a gas supply pipe 201 of an individual house, and a gas pipe 203 passed through the gas meter 202 branches off and extends up to locations where various gas appliances to be used at home are installed, and gas is supplied by way of the pipe. For example, a gas hot water supply 204 is installed outdoors. Hot water produced by the gas hot water supply 204 is supplied, by way of a water pipe, to a hot water faucet 205 of a kitchen, a bathroom 206 where a bathtub or a shower unit is installed, and the like. Thus, various use arrangements are realized.

In the interior of a house, gas is supplied to a gas cooker 208 installed in the kitchen and a gas fan heater 209 set in the living room, a bedroom, and others. The gas appliances are used as required.

When gas is consumed as a result of use of any of the thus-installed gas appliances, the gas meter 202 measures the quantity of gas consumption, and data are cumulatively kept every predetermined period. After subjected to predetermined information processing in accordance with a periodic data request command from a gas utility company 215, the data stored in the gas meter 202 is transmitted to the gas utility company 215 by way of a base station 214.

A wireless module 211 integrally built in a control circuit board 210 making up a controller incorporated in the gas meter 202 as shown in Fig. 17 is used as transmission unit. The wireless module 211 is removably implemented on the control circuit board 210 by a connector 210d. There is thus realized a configuration that makes it possible to arbitrarily select either a gas meter having neither the wireless module 211 nor a communication function or a gas meter having the wireless module 211 and a communication function. An attempt is thus made to standardize the gas meter 202, and the gas meter can be used regardless of presence/absence of communication function.

The wireless module 211 is made removably attachable. Even when the gas meter has a communication function, it becomes unnecessary for a main unit of the gas meter to acquire standards of a communication instrument, so long as the wireless module conforming to the communication standard is provided in the gas meter. In a case where a gas meter is changed, and the like, the gas meter can comparatively, freely changed without being regulated.

As shown in Fig. 19, the wireless module 211 has, as communication unit for establishing communication with the base station 214, a wide area transmission wireless module 211a having a transmission frequency band of; for instance, 200 MHz, differing from a transmission frequency band of a phone line. The wireless module 211 is configured so as to include an area transmission wireless module 211b having a specified low power radio transmission frequency band of; for instance, 429 MHz, as receiving unit that receives appliance information and operating information from, other than a gas appliance, an appliance taking; for instance, oil and electricity as energy.

A receiving unit that receives operating information, and the like, from another appliance other than a gas appliance (the area transmission wireless module 211b) and a communication unit that exchanges information with an external party (the wide area transmission wireless module 211 a) are made up of the wireless module 211 incorporated in the gas meter. For instance, when data from a control circuit 210a that calculates the quantity of gas consumption from a flow signal and a sensor signal or that detect an anomaly, such as an earthquake and leakage of gas, are transmitted to the outside, such as the gas utility company 215, and when various types of information transmitted form the outside, such as the gas utility company 215, is received, the wide area transmission wireless module 211a serving as communication unit is used. When appliance information and operating information transmitted from another appliance other than a gas appliance is received, the area transmission wireless module 211b serving as receiving unit is used.

A flow measurement processing unit that is built in the control circuit 210a, that measures the quantity of gas slow, that subjects a measurement result to predetermined processing, and that produces an output as flow information is now briefly described. As shown in Figs. 17 and 18, the gas meter 202 has a gas inlet 202a and a gas outlet 202b. Provided in a gas passageway between the gas inlet and the gas outlet are a shutoff valve 202c for cutting off gas in case of occurrence of an anomaly and a pair of ultrasonic sensors 217 that measure the quantity of gas flow. A pressure sensor 202d that detects a gas pressure is disposed downstream of the pair of ultrasonic sensors.

The control circuit board 210 equipped with the control circuit 210a that calculates the quantity of gas flow from a signal from the ultrasonic sensors 217 and a liquid crystal indicator 210e is arranged in such a way that the liquid crystal indicator 210e faces a display section 202e of the gas meter 202. The control circuit board 210 houses a battery 202f for driving the control circuit 210a. A reset button is provided as unit for manually performing reset operation after activation of the shutoff valve 202c.

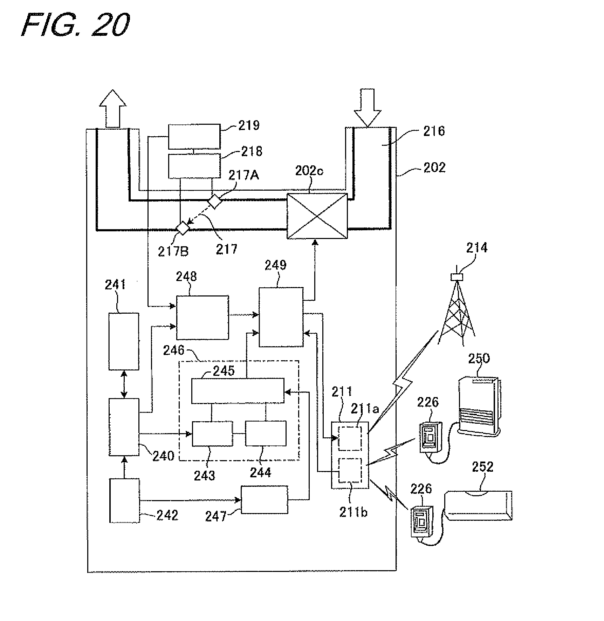

The flow measurement section 217 for measuring the quantity of gas flow and the control circuit 210a measure the quantity of flow by arranging a pair of ultrasonic sensors 217A and 217B in the gas passageway 216 as shown in; for instance, Fig. 20, and measuring a propagation time of an ultrasonic wave that changes in accordance with the quantity of flow in the passageway.

The structure of the flow measurement section is hereunder descried briefly. The first transceiver 217A for transmitting or receiving an ultrasonic wave and the second transceiver 217B for receiving or transmitting the same are disposed opposite each other along a direction of flow. A measurement control section 218 having a toggle unit making up the control circuit 210a can toggle the transceivers between a transmission mode and a receiving mode, thereby detecting a flowing state of fluid, such as gas. The quantity of flow is measured by processing signals from the first transceiver 217A and the second transceiver 217B. Specifically, the measurement control section 218 initially drives the first transceiver 217A, thereby transmitting an ultrasonic wave toward the second transceiver 217B; namely, from an upstream position toward a downstream position.

The signal received by the second transceiver 217B is amplified by an amplifying unit provided in the measurement control section 218. The thus-amplified signal is compared with a reference signal. After detection of a signal that is equal to or greater than the reference signal, a repeat unit provided in the measurement control section 218 iterates the transmission and receiving operations a predetermined number of times. Resultantly-acquired time values are measured by a clock unit, such as a timer counter provided in the measurement control section 218.

Next, the measurement control section 218 including a switching unit switches the first transceiver 217A from the transmission mode to the receiving mode, as well as switching the second transceiver 217B from the receiving mode to the transmission mode. An ultrasonic signal is transmitted from the second transceiver 217B to the first transceiver 217A; namely, from the downstream position toward the upstream position. Transmission is iterated a predetermined number of times, and a time value is measured each time. In consideration of the size of the gas passageway 216 and the flowing state of the fluid, a signal processing unit 219 determines a flow value from differences between propagation times of the ultrasonic waves transmitted from the first transceiver 217A and propagation times of the ultrasonic waves transmitted from the second transceiver 217B. The thus-determined flow data are an accumulated in information storage unit 210b and stored as cumulative data for each predetermined period.

The shutoff valve 202c for cutting off the flow of gas in case of an anomaly, and the like, is disposed in the gas passageway 216 where the flow measurement section 217 is provided. When the flow value determined by the signal processing unit 219 is anomalously large or when a flow value is detected in excess of an ordinarily-expected operating time, occurrence of an anomaly is determined, whereupon the shutoff valve 202c is activated, to thus cut off the gas passageway 216.

When a signal related to an earthquake or physical impact is input from the seismoscope 221 or when a signal related to an anomalous gas pressure is input from the pressure sensor 202d, the shutoff valve 202c is activated with the control circuit 210a, thereby cutting off the gas passageway 216. Further, a report is sent to the outside, such as the gas utility company 215, and the like, by way of the base station 214 through use of the wide area transmission wireless module 211a serving as communication unit.

As mentioned above, various units making up the control circuit 210a perform determination processing, which will be described below, by use of a flow value for each predetermined period measured by the flow measurement section 217 and determined through predetermined arithmetic processing. The type of a gas appliance can thereby be specified, and information about the use pattern of the gas appliance can further be acquired.

An example is provided in Fig. 20. Provided in the gas meter 202 is registration storage unit 240 that inputs and stores a flow pattern corresponding to appliance information about a gas appliance that is to be used at home and for which an application is filed by the user. There is also provided a storage unit 241 that stores a characteristic flow pattern of gas flow conforming to the type or use pattern of an estimated gas appliance while bringing the flow pattern in correspondence with a code number. A code number corresponding to the appliance information about a gas appliance for which the user has filed an application and that is to be used at home is input to the information input unit 242 from a keyboard or an external input device. The flow pattern stored in the storage unit 241 is retrieved and stored as registration data in the registration storage unit 240.

The registration storage unit 240 may also be made up of a rewritable memory card, and information about a gas appliance to be used at home may be preliminarily written in the registration storage unit. The registration storage unit may removably be housed in a card housing section provided in the gas meter 202.

There is provided an appliance specifying unit 246 having an appliance signal registration unit 243, an individual-application-basis signal registration unit 244, and an appliance classification unit 245. When appliance information is input from the information input unit 242 or when the registration storage unit 240 made up of a memory card, or the like, is inserted into the gas meter 202, the appliance signal registration unit sets and registers an appliance signal for specifying the type of a gas appliance to be used in accordance with appliance information stored in the registration storage unit 240. The individual-application-basis signal registration unit specifies a use pattern for an application of an individual gas appliance to be employed. In accordance with registration information from the appliance signal registration unit 243 and the registration information from the individual-application-basis signal registration unit 244, the appliance classification unit classifies a gas appliance used at home for each of the items previously categorized in connection with details of specific monitoring, and others, by the gas utility company, and the like.

A classification item selection unit 247 selects monitoring items which are to be classified by the gas utility company in correspondence with details of monitoring specified by the gas utility company, and the monitoring items corresponding to monitoring details are set in the appliance classification unit 245. A selection command for the classification item selection unit 247 can be issued with the information input unit 242.

In a case where the registration storage unit 240 is made up of a memory card, an appliance specifying unit 246 including an appliance classification unit 245 may also be integrally built in the memory card. Information about gas appliances used at home can collectively be managed in connection with the monitoring details specified by the gas utility company, so that an attempt can be made to enhance convenience.

The appliance signal registration unit 243 sets and registers a signal in accordance with the type of an appliance as shown in; for instance, a table (Table 1) provided below.

[Table 1]

| | |
|---|---|
| GAS HOT WATER SUPPLY | SIGNAL A |
| GAS COOKING APPLIANCE | SIGNAL B |
| GAS FAN HEATER | SIGNAL C |

The individual-application-basis signal registration unit 244 sets and registers a signal for specifying a use pattern for each of applications of appliances, as shown in; for instance, a table (Table 2) provided below.

[Table 2]

| | |
|---|---|
| HOT WATER SUPPLY BEING USED | SIGNAL A1 |
| BATH BEING USED | SIGNAL-2 |
| FLOOR HEATING BEING USED | SIGNAL A-3 |
| WARM-AIR HEATING BEING USED | SIGNAL C-1 |
| COOKING APPLIANCE BEING USED | SIGNAL B-1 |
| OTHER | SIGNALED-1 |

In relation to details of specific monitoring performed by the gas utility company, the appliance classification unit 245 preliminarily sets and categorizes gas charge discount target fields according to; for instance, the type and use pattern of a gas appliance, and classifies gas appliances employed at home into corresponding fields in accordance with information acquired from (Table 1) and (Table 2). As shown in; for instance, a table (Table 3) provided below, the appliance classification unit 245 classifies a working gas appliance to Category of Discount A when floor heating is performed by use of a hot water supply; classifies a working gas appliance to Category of Discount B when warm-air heating is performed by use of a gas fan heater, and the like; and classifies another gas appliance to a standard. Thus, the gas appliances used at home are set and registered.

[Table 3]

| | |
|---|---|
| CATEGORY OF DISCOUNT A | A-1 |
| CATEGORY OF DISCOUNT B | C-1 |
| STANDARD | OTHERS |

There is provided an appliance determination unit 248 that determines an appliance being used by comparison of a flow value determined by the signal processing unit 219 with data (flow pattern) registered in the registration storage unit 240, and an individual-appliance-basis monitoring unit 249 that monitors the quantity of gas consumption according to conditions of usage of the gas appliance determined by the appliance determination unit 248 is further provided. The individual-appliance-basis monitoring unit 249 inputs a gas flow value determined by the signal processing unit 210 of the flow measurement section 217. The gas flow value is managed in conjunction with registered information about the gas appliance determined by the appliance determination unit 248. Information, such as a cumulative flow value achieved in each predetermined period, is output in response to a request from the gas utility company.

In the present embodiment, gas charge discount target items conforming to the type, use pattern, and the like, of a gas appliance are set as details of specific monitoring performed by the gas utility company. However, the specific monitoring is not limited to setting of the items. A specific gas appliance or a specific use pattern may also be set as a safety monitoring item or items for monitoring periodic inspection and replacement timing.

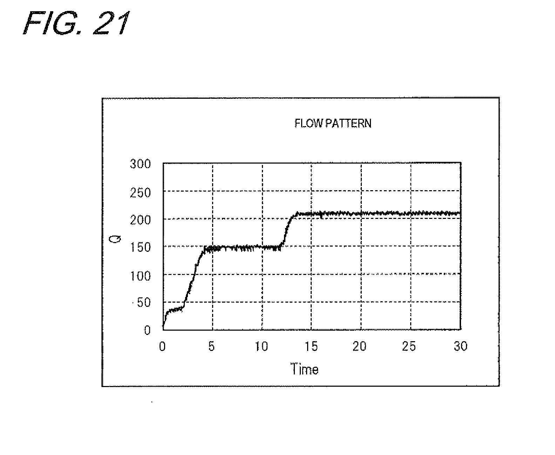

Example appliance determination performed by the appliance determination unit 248 is now described. For instance, a flow pattern, such as that shown in Fig. 21, is used as registration data to be stored in the registration storage unit 240. Actual registration data corresponds to data generated by storing information pertaining to a flow value acquired; for instance, every 0.2 seconds, for a predetermined period of time from activation of an appliance. A time interval of data is not limited to 0.2 seconds and can arbitrarily be set in conformance with required appliance determination capability.

The flow measurement section 217 measures the quantity of gas flow at predetermined time intervals. When a newly-measured gas flow value increases from an immediately-preceding value by a predetermined level or more, a new appliance is determined to be used. The flow change is compared with a flow pattern corresponding to the code of the appliance registered in the registration storage unit 240, thereby determining an appliance being used.

When a signal pertaining to an anomalous flow, and the like, is input from the flow measurement section 217, safety is ensured by cutting off the gas passageway 216 with the shutoff valve 202c.

There will now be described a case where the gas meter 202 is used as unit for acquiring information about an appliance other than a gas appliance; for instance, an appliance taking oil or electricity as energy. As mentioned above, it is possible to acquire appliance information about a gas appliance as information about the type, use pattern, and the like, of an appliance, by use of a flow value determined at a predetermined period by the flow measurement unit. However, the gas meter 202 encounters difficulty in determining an appliance that takes oil or electricity as energy and that is not relevant to gas flow information at all. However, when an appliance is specified by any means, subsequent management of the appliance; for instance, monitoring of periodic inspection timing, replacement timing, and the like, can be performed in a shared manner by use of the gas appliance management unit.

Accordingly, an example unit for acquiring information about an appliance other than the gas appliance is described.

As shown in Fig. 14, the majority of appliances other than the gas appliances installed at home; for instance, an oil heater 250, an electric floor heater 251, and an air conditioner 252, are occupied by appliances using commercial power. The appliances are of standard type and are used while their plugs are inserted into outlets embedded in walls, and the like.

Accordingly, as shown in Fig. 15, an operating information acquisition unit 222 and an appliance information transmitter 226 are provided as unit for determining an appliance other than the gas appliance. The operating information acquisition unit 222 detects start and stoppage of operation without receiving a signal from a controller of an appliance. The appliance information transmitter 226 serving as appliance information transmission unit integrally incorporates an appliance wireless module 211d that transmits the thus-acquired operating information. As shown in Fig. 16, a specific example configuration of the operating information acquisition unit 222 is made up of an energization level change detection unit 222a that detects a change in the quantity of current flowing through an appliance; an operation start signal conversion unit 222b that determines start of operation when an incremental change in the quantity of current is detected and that outputs a signal; and an operation stop signal conversion unit 222c that detects stoppage of operation when a decremental change in the quantity of current is detected and that outputs a signal. When the operation start signal conversion unit 222b and the operation stop signal conversion unit 222c output signals, an operation signal determination unit 211e determines whether or not the signals are output under influence of noise, and the like. When the signals are determined to be normal, the appliance wireless module 211 d equipped with a transmission circuit 211 f transmits appliance information given an individual-appliance-basis code set by an identification code change unit 227 to the area transmission wireless module 211b serving as receiving unit of the gas meter 202. The area transmission wireless module 211b received appliance information delivers the information to the individual-appliance-basis monitoring unit 249. Monitoring a gas appliance, the individual-appliance-basis monitoring unit 249 simultaneously monitors an appliance other than a gas appliance, as well. When predetermined monitoring conditions are satisfied, and the like, a report is sent to the outside by use of the wide area transmission wireless module 211a serving as communication unit of the gas meter 202.

The appliance information transmitter 226 configured as mentioned above assumes the shape of a receptacle adaptor as shown in Fig. 15. A plug is connected to a power outlet embedded in a wall, and the like. A power plug of an appliance is connected to a socket 223 built into a receptacle adaptor, and power is supplied by way of the receptacle adaptor.

A detailed explanation is now provided by use of a control block diagram shown in Fig. 16. When; for instance, the oil heater 250 starts operating, a heater is usually energized to vaporize kerosene that is fuel, whereupon preliminary heating operation of a burner is started. A comparatively large current flows when operation is started, whereupon the quantity of energization changes in an increasing manner. The energization level change detection unit 222a detects the change, and the operation start signal conversion unit 222b converts the change into a predetermined operation start signal and outputs the signal to the operation signal determination unit 211e, thereby determining whether or not the operation start signal is normal. When a determination result is normal, the operation signal determination unit 211e sends a signal to the transmission circuit 211f, an identification code unique to the oil heater 250 set by the identification code change unit 227 is imparted to the signal, and the signal is transmitted as appliance information from the appliance wireless module 211d to the area transmission wireless module 211b of the gas meter 202. By means of a series of operations, it becomes possible to detect start of operation of the appliance without receiving a signal from the controller of the oil heater 250, and the signal can be transmitted to the gas meter 202.

The gas meter 202 received the operation start signal performs predetermined monitoring operation at the individual-appliance-basis monitoring unit 249.

Likewise, when operation of the oil heater 250 has stopped, energization of the load is stopped; hence, the quantity of current changes in a decremental fashion. The energization level change detection unit 222a detects the change, and the operation stop signal conversion unit 222c converts the change into a predetermined operation stop signal and outputs the signal to the operation signal determination unit 211e, where a determination is made whether or not the operation stop signal is normal. When a determination result shows that the signal is normal, the operation signal determination unit 211e sends a signal to the transmission circuit 211f. The identification code unique to the oil heater 250 set by the identification code change unit 227 is imparted to the signal, and the signal thus imparted with the code is transmitted as appliance information from the appliance wireless module 211d to the area transmission wireless module 211b of the gas meter 202. By means of a series of operations, it becomes possible to detect stoppage of operation of the appliance without receiving a signal from the controller of the oil heater 250, and the signal can be transmitted to the gas meter 202.

The gas meter 202 received the operation stop signal performs predetermined monitoring operation in the individual-appliance-basis monitoring unit 249.

The embodiment has been described by taking the oil heater 250 as an example. However, needless to say, similar detection can be performed in connection with another appliance; for instance, the electric floor heater 251, the air conditioner 252, and the like.

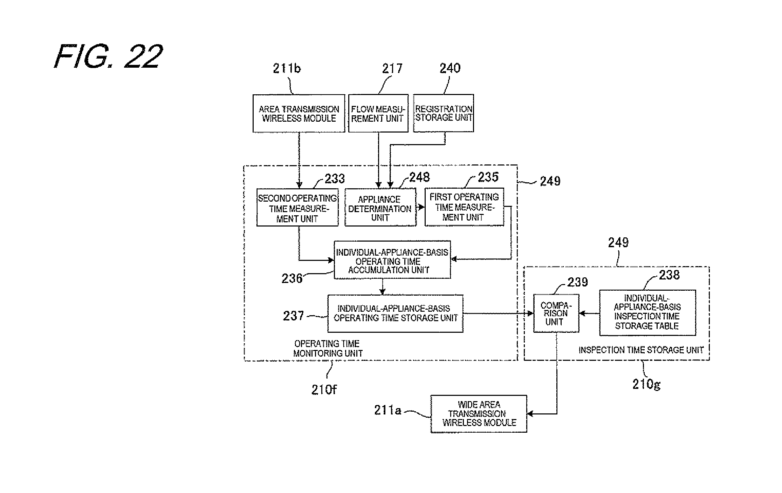

Example monitoring operation performed by the individual-appliance-basis monitoring unit 249 is now described by reference to Fig. 22. Monitoring processing of the present embodiment is realized by processing for monitoring a cumulative value of an operating time for each specific appliance and accurately reporting inspection timing or exchange or replacement purchase timing.

In Fig. 22, an operating time monitoring unit 210f performs monitoring operation by use of a different operating time measurement unit between a case where a gas appliance is monitored and a case where an appliance other than a gas appliance is monitored.

In the case of a gas appliance, the appliance determination unit 248 compares a flow pattern based on a momentary flow value of predetermined cycle determined by the flow measurement unit 217 with the individual-appliance-basis flow pattern stored in the registration storage unit 240, thereby specifying the type of a gas appliance, and the like. When the type of a gas appliance, or the like, is specified, a period between a point in time when the quantity of flow changes in an incremental fashion and a point in time when the quantity of flow changes in a decremental fashion is simultaneously detected. First operating time measurement unit 235 measures the duration of the period, and a result of measurement is sent to an individual-appliance-basis operating time accumulation unit 236. An individual-appliance-basis operating time storage unit 237 stores a cumulative operating time value on an individual appliance basis. A comparison unit 239 compares the individual-appliance-basis cumulative operating time value with an individual-appliance-basis or individual-specific-component-basis inspection or replacement time previously stored in an individual-appliance-basis inspection time storage table 238 of an inspection time storage unit 210g. After the cumulative individual-appliance-basis operating time value has exceeded the stored inspection time value, a signal is sent to the wide area transmission wireless module 211a serving as communication unit, whereby inspection time arrival information is transmitted to the gas utility company, the specific monitoring center, and the like, by way of the base station 214.

Subsequently, in the case of an appliance other than a gas appliance, an operation start signal imparted with an appliance identification code from the appliance information transmitter 226 serving as appliance information transmission unit provided for each appliance; for instance, an operation start signal from the appliance information transmitter 226 of the oil heater 250, is transmitted to the area transmission wireless module 211b serving as receiving unit. The second operating time measurement unit 233 starts measuring an operating time of the oil heater 250. Next, an operation stop signal is transmitted from the appliance information transmitter 226 of the oil heater 250, measurement is stopped. The individual-appliance-basis operating time accumulation unit 236 accumulates a period of time between the start and stop of measurement as an operating time of the oil heater 250. The individual-appliance-basis operating time storage unit 237 stores the operating time as a cumulative operating time value on an individual appliance basis. Likewise, the comparison unit 239 compares the individual-appliance-basis cumulative operating time value with an individual-appliance-basis or individual-specific-component-basis inspection/replacement time previously stored in the individual-appliance-basis inspection time storage table 238 of the inspection time storage unit 210g. After the cumulative individual-appliance-basis operating time value has exceeded the stored inspection time value, a signal is sent to the wide area transmission wireless module 211a serving as communication unit, whereby inspection time arrival information is transmitted to the gas utility company, the specific monitoring center, and the like, by way of the base station 214.

When operating information is transmitted from a plurality of appliances other than gas appliances, the second operating time measurement unit 233 is configured so as to be able to measure a plurality of operating times in response to the operating information from the plurality of appliance information transmission units, whereby accurate cumulative operating time values of the appliances can be ascertained, and appropriate appliance management becomes possible.

As mentioned above, according to the present invention, the individual-appliance-basis operating information about the gas appliance can be acquired by use of an appliance determination function that performs determination processing in accordance with a result of measurement performed by the flow measurement unit 217 built in the gas meter 202. Individual-appliance-basis operating information about an appliance other than a gas appliance can be acquired from individual-appliance-basis operating information transmitted from another appliance by the area transmission wireless module 211b that is built in the gas meter 202 and that serves as receiving unit. Therefore, information about the type and a cumulative operating time of an appliance used at home, and the like, can be acquired in real time and without fail.

The thus-acquired individual-appliance-basis operating information is compared with a value stored in the individual-appliance-basis inspection time storage unit 210g that stores, on an individual appliance basis or an individual component basis, inspection timing or replacement timing which vary according to the type of an appliance. An appropriate inspection time can thereby be grasped, and inspection timing arrival information can be reported to the outside, such as the monitoring center. Therefore, preliminary inspection work can be performed to the extreme extent, and a durability-related problem can be resolved.

The operating information acquisition unit 222 that detects start and stoppage of operation without receiving a signal from a controller of an appliance is provided as units for specifying an appliance other than a gas appliance. The appliance wireless module 211d that transmits acquired operating information is integrally housed. Therefore, the appliance wireless module is also applicable to an appliance that is already installed and used. Operating information about an appliance other than a gas appliance; for instance, an appliance that takes oil or electricity as energy, can briefly be acquired without involvement of special change work. The thus-acquired information is transmitted to the gas meter 202, so that management of appliances involving the gas meter 202 as an information relay can be shared.

A unique identification code is imparted according to the type of an appliance used at home, and an operation start signal and an operation stop signal are transmitted along with the identification code, whereby which of appliances started and stopped operation can be reported without fail. Further, the identification code change unit that allows arbitrary changing or setting of an appliance-specific identification code is provided. Hence, even when an appliance is changed by replacement purchase, and the like, the appliance can be addressed by changing only an identification code. Further, reuse of the identification code is also possible, and hence extremely-effective appliance information transmission unit can be provided.

Moreover, the operating information acquisition unit 222 is specifically configured so as to output an operation start signal upon detection of a phenomenon of an incremental change in the quantity of current flowing in an appliance and an operation stop signal upon detection of a phenomenon of a decremental change in the quantity of current flowing in an appliance. There is configured the appliance wireless module 211d that converts respective outputs into wireless signals; that imparts the signals with appliance identification codes; and that transmits the signals to the gas meter 202. The operating information acquisition unit 222 and the wireless module 211d are integrated into a single piece while being housed in a receptacle unit to which an electric cord is connected, and power is supplied to the appliance with the receptacle unit. The operating information acquisition unit is thereby usable for an appliance that is already installed and used. Operating information about an appliance other than a gas appliance; for instance, an appliance taking oil or electricity as energy, can briefly be acquired without involvement of a special change operation. Management of appliances involving a gas meter as an information relay can be shared by transmitting the information to the gas meter.

The operating time monitoring unit 210f differentiates between an operating time of a gas appliance and an operating time of another appliance. In the case of a gas appliance, monitoring is performed by use of the first operating time measurement unit (first individual-appliance-basis operating time monitoring unit) 235. At this time, predetermined determination processing is performed in accordance with a result of flow measurement performed by the flow measurement unit 217 built in the gas meter, whereby a gas appliance being used is specified. Concurrently, the duration of a period between occurrence of an incremental change in the quantity of flow and occurrence of a decremental change in the quantity of flow is measured and taken as an operating time of an appliance, and the operating time is accumulated in correspondence with the specified gas appliance. The cumulative operating time is compared with preset inspection timing or replacement timing, whereby an appropriate inspection time for each gas appliance can be ascertained.

The monitoring unit differentiates between an operating time of a gas appliance and an operating time of another appliance. In the case of an appliance other than a gas appliance, monitoring is performed by use of the second operating time measurement unit (the second individual-appliance-basis operating time monitoring unit) 233. At this time, counting of an operating time is started by an application identification code transmitted from an appliance other than a gas appliance and operation start information including an operation start signal and by use of the area transmission wireless module 211b that is built in the gas meter 202 and that serves as receiving unit. By use of the same, counting of the operating time is stopped by the application identification code transmitted after elapse of a predetermined time and operation stop information including an operation stop signal. A count value acquired during the period between the start and stop of counting operation is accumulated in correspondence with the appliance identification code. The cumulative operating time is compared with preset inspection timing or replacement timing, whereby an appropriate inspection time for each gas appliance can be ascertained.

There is also provided an operating time table in which appropriate inspection or replacement timings are set in a plurality of columns for an individual type of an appliance or on an individual component basis. Hence, inspection timing for an appliance requiring checking of durability or a specific component can appropriately be reported. Moreover, a change is made to the operating time table in accordance with the duration of an operating time, the number of inspecting operations, and a preset condition; hence, an appropriate report about inspection timing conforming to a use environment can be made.

The present invention shall not be limited to the embodiments provided and is scheduled to be subjected to alterations or applications by those skilled in the art in accordance with the descriptions of the specification or the well-known techniques. The alterations and applications also fall within a range in which protection of the invention is sought.

The present patent application is based on Japanese Patent Application filed on March 6, 2008 (JP-A-2008-056816), Japanese Patent Application filed on March 6, 2008 (JP-A-2008-056817), and Japanese Patent Application filed on March 6,2008 (JP-A-2008-056818), contents of which are incorporated herein by reference.

**Industrial Applicability**

An appliance management system of the present invention specifies an appliance other than a gas appliance by utilization of a gas appliance monitoring apparatus and can send a report about the arrival of inspection timing to an inspection service provider or a user by monitoring an installation time; hence, the system is also useful in connection with monitoring items other than inspection timing.

Further, the present invention is useful for a gas supply system that curtails the quantity of gas consumption, thereby reducing the amount of $CO_2$ emissions and a gas supply system that clarifies the amount of $CO_2$ emissions and implements transaction of $CO_2$ without involvement of injustice.

The present invention also enables detection of operation and stoppage of an appliance without receiving a signal from an appliance controller and monitoring of an operating time by use of the information. Therefore, the present invention can also be applied to monitoring of safety of an individual appliance other than its operating time and various services provided by business organizations, by use of the monitoring unit.

**Claims**

1. An appliance management system comprising:

   a gas appliance determination unit for determining a type of a gas appliance from gas flow information;
   an appliance setting unit that enables arbitrary input of information about an appliance other than a gas appliance with an input unit;
   a monitoring target appliance registration unit that specifies and registers a monitoring target appliance from a result of determination made by the gas appliance determination unit and/or setting information from the appliance setting unit;
   an individual-appliance-basis elapsed time storage unit that clocks a time elapsed from a point in time when a monitoring target appliance is registered in the monitoring target appliance registration unit on a registered individual appliance basis and stores the clocked time;
   an individual-appliance-basis check time storage unit that stores an inspection time or life time on a registered individual appliance basis;
   a monitoring determination unit that outputs a report signal when a value stored on an individual registered appliance basis in the individual-appliance-basis elapsed time storage unit exceeds a value stored in the individual-appliance-basis check time storage unit; and
   a communication unit that establishes communication of information with a monitoring center or a customer indicator.

2.   An appliance management system comprising:

a flow measurement section that measures at a predetermined period a quantity of gas flow connected to a gas supply pipe;

an appliance determination section that determines a gas appliance to be used from a previously-specified flow change characteristic on the basis of a quantity of momentary flow determined from a measured value of the flow measurement section through predetermined arithmetic processing;

an appliance setting section that enables manual input of appliance information about a monitoring target appliance;

an appliance registration section that selects and registers a predetermined monitoring target appliance in accordance with a result of determination made by the appliance determination section and/or a result of input performed with the appliance setting section;

a timer section that integrates, on a registered individual appliance basis, a time elapsed from a point in time when an appliance is registered as a monitoring target appliance in the appliance registration section and that stores the integrated time;

a communication section that is connected to a monitoring center with a communication line and that performs processing of communication of flow information, appliance information, and the like; and

a control section that compares the time integrated by the timer section with a preset monitoring time and that outputs a signal for sending a report to a gas utility company or a user when the integrated time has exceeded the monitoring time.

3.   The appliance management system according to claim 2, wherein the appliance setting section can perform registration of an appliance in the appliance registration section, alteration of the appliance, and deletion of the appliance by use of the communication section.

4.   The appliance management system according to claim 2, wherein the timer section is made up of an appliance timer section that measures an integrated time on a registered individual appliance basis, and the control section is arranged so as to be able to arbitrarily set, on a registered individual appliance basis, a monitoring time that is to be compared with a measured, integrated time.

5.   The appliance management system according to claim 2, wherein the appliance registration section also enables registration of, other than a gas appliance, appliances that take oil and electricity as energy; imparts identification codes to respective appliances; and manages registered appliances while differentiating them from each other.

6.   The appliance management system according to claim 2, further comprising: a report destination registration section that registers a report destination on a registered individual appliance basis and a report destination selection section that selects a report destination registered in the report destination registration section.

7.   A gas supply system comprising:

a flow measurement section that is connected to a gas supply pipe and that measures a quantity of gas consumption;

a communication section that sends a communication of a measured quantity of gas consumption to a gas utility company;

an integration section that integrates a quantity of gas consumption in a predetermined period for each gas consumer;

a conversion section that converts the quantity of gas consumption into an amount of $CO_2$ emissions;

a comparison section that compares an amount of $CO_2$ emissions acquired in a previous predetermined period with an amount of $CO_2$ emissions acquired in a current predetermined period or that compares a quantity of gas consumption in a previous predetermined period with a quantity of gas consumption in a current predetermined period; and

a feedback section that reports to a gas user a result of a comparison between the amount of $CO_2$ emissions acquired in a previous predetermined period with the amount of $CO_2$ emissions acquired in a current predetermined period performed by the comparison section or a comparison between the quantity of gas consumption in a previous predetermined period with the quantity of gas consumption in a current predetermined period performed by the comparison section.

8.   The gas supply system according to claim 7, further comprising a total integration section that sums quantities of supplied consumed gas by all gas consumers in a predetermined period of time.

9. The gas supply system according to claim 7, further comprising:

an appliance determination section that determines, on the basis of a quantity of momentary gas flow and from a flow change characteristic of a quantity of gas flow, an appliance which uses a gas flowing through the gas supply pipe; and

an appliance integration section that integrates a quantity of gas consumption in a predetermined period according to an appliance determined by the appliance determination section.

10. The gas supply system according to claim 7, further comprising:

a data encryption section that renders data pertaining to an integrated quantity of gas consumption unrewritable.

11. An appliance management system that monitors conditions of usage of a gas appliance connected to a pipe passed through a gas meter and that can receive information from another appliance, wherein
the gas meter includes flow measurement unit for measuring a quantity of gas flow, a shutoff valve that cuts off a gas passageway in case of occurrence of an anomaly, a control circuit that performs predetermined processing in accordance with a result of measurement performed by the flow measurement unit and that outputs flow information, a receiving unit that receives operating information, and the like, from another appliance, and a communication unit that transmits and receives information to and from an external party;
the other appliance has an appliance information transmission unit that transmits operating information including a code for identifying an appliance and a signal pertaining to a period from start to stoppage of operation; and
the control circuit has a first appliance operating time monitoring unit that manages a cumulative value of an operating time for each working gas appliance in response to a result of process for determining a working gas appliance on the basis of a flow measurement result, a second appliance operating time monitoring unit that manages a cumulative value of an operating time of an individual appliance other than a gas appliance in response to operating information from the appliance information transmission unit, and an individual-appliance-basis inspection time storage unit that stores, on an individual appliance basis, a time when inspection or replacement is required; and
inspection time arrival information is transmitted to the outside by use of the communication unit when a cumulative value of the operating time monitored by the first individual-appliance-basis operating time monitoring unit and the second individual-appliance-basis operating time monitoring unit has reached a value stored in the individual-appliance-basis inspection time storage unit.

12. The appliance management system according to claim 11, wherein the appliance information transmission unit integrally houses an operating information acquisition unit capable of detecting an operating state and a wireless module that transmits operating information, to thus become able to acquire operating information about an exiting appliance as well.

13. The appliance management system according to claim 11, wherein the appliance information transmission unit has an identification code change unit that sets or changes a unique identification code for specifying an appliance.

14. The appliance management system according to claim 11, wherein the appliance information transmission unit has an operating information acquisition unit configured so as to acquire operating information by detecting a characteristic that changes when operation of an appliance is started and stopped, and an operation start signal is output when the operating information acquisition unit has detected start of operation and an operation stop signal is output when the operating information acquisition unit has detected stoppage of operation.

15. The appliance management system according to claim 11, wherein the first individual-appliance-basis operating time monitoring unit measures a time from when an incremental change arises in a result of measurement of a quantity of flow until when a decremental change arises in the result of measurement of the quantity of flow and takes the time as an operating time of an appliance, accumulates the operating time in correspondence with a simultaneously-determined working gas appliance, and monitors an operating time of an individual gas appliance.

16. The appliance management system according to claim 11, wherein the second individual-appliance-basis operating time monitoring unit starts counting operation by an appliance identification code and operation start information including an operation start signal that are transmitted from the appliance information transmission unit and stops counting operation by the appliance identification code and operation stop information including an operation stop signal; accumulates the count value in correspondence with the appliance identification code; and monitors an operating time of an individual appliance other than a gas appliance.

17. The appliance management system according to claim 11, wherein the individual-appliance-basis inspection time storage unit stores inspection timing or replacement timing, which varies according to a type of an appliance, in the form of an operating time table with a plurality of columns in which the timing is set on an individual appliance basis or an individual component basis; and performs monitoring operation by use of an operating time table conforming to preset conditions.

*FIG. 1*

EP 2 258 985 A1

*FIG. 2*

EP 2 258 985 A1

EP 2 258 985 A1

*FIG. 3*

## FIG. 4

```
                                        ┌─────────────────────┐
                                        │   START COMMAND     │──24
                                        └─────────────────────┘
                                                   │
        ┌──────────────────────────────────────┐  │
        │  ┌────────────────────────────────┐  │  ▼
        │  │              27                 │  │  ┌─────────────────────┐
        │  │  ┌──────────────────────────┐  │  └─▶│   FLOW MEASUREMENT  │──25
        │  │  │ INTERVAL SETTING COMMAND │  │     │      COMMAND        │
        │  │  └──────────────────────────┘  │     └─────────────────────┘
        │  │              ▲                        │
        │  │              │           NO        26 ▼
        │  │              └──────────────◇──────────────◇
        │  │                             ◇ FLOW CHANGE  ◇
        │  │                             ◇──────────────◇
        │  │                                    │ YES
        │  │              30                    ▼
        │  │  ┌──────────────────────────┐     ┌─────────────────────┐
        │  └─▶│ INTERVAL SETTING COMMAND │     │  RISE WAVEFORM      │──28
        │     └──────────────────────────┘     │ GENERATION COMMAND  │
        │              ▲                        └─────────────────────┘
        │              │                              │
        │              │             NO            29 ▼
        └──────────────┴──────────────◇──────────────◇
                                      ◇  APPLIANCE   ◇
                                      ◇   PATTERN    ◇
                                      ◇──────────────◇
                                             │ YES
                                             ▼
                                      ┌─────────────────────┐
                                      │ APPLIANCE           │──31
                                      │ SPECIFICATION       │
                                      │ COMMAND             │
                                      └─────────────────────┘
                                             │
                                             ▼
                                        (   END   )
```

FIG. 5

EP 2 258 985 A1

FIG. 6

EP 2 258 985 A1

# FIG. 7

Block diagram (reference 10) showing:

- APPLIANCE A (1), APPLIANCE B (2), APPLIANCE C (3)
- ULTRASONIC FLOWMETER (11)
- SHUTOFF VALVE (18)
- (20) — line
- FLOW COMPUTING SECTION (12)
- APPLIANCE DETERMINATION UNIT (13)
- DETERMINATION REGISTRATION SECTION (14)
- CONTROL SECTION (15)
- TIMER SECTION (16): APPLIANCE A TIMER, APPLIANCE B TIMER, APPLIANCE C TIMER
- SEISMOSCOPE (17)
- SHUTOFF VALVE (18)
- DISPLAY SECTION (19)
- COMMUNICATION SECTION (41)
- MANAGEMENT CENTER UNIT (40)
- USER DISPLAY UNIT (42)
- APPLIANCE SETTING SECTION (43)
- APPLIANCE REGISTRATION APPARATUS (44)

FIG. 8

FIG. 9

EP 2 258 985 A1

*FIG. 10*

110″ GAS SHUTOFF APPARATUS ... 110′ GAS SHUTOFF APPARATUS

140

MANAGEMENT CENTER UNIT

INTEGRATION SECTION ** ... INTEGRATION SECTION 2

146
CONVERSION SECTION

150
COMBINATIONAL INTEGRATION SECTION

145
INTEGRATION SECTION 1

148
COMPARISON SECTION

144
TIMER SECTION

147
STORAGE SECTION

149
FEEDBACK SECTION

142
USER DISPLAY UNIT

110

120

117
SHUTOFF VALVE

141
COMMUNICATION SECTION

115
CONTROL SECTION

113

111
ULTRASONIC FLOWMETER

112
FLOW COMPUTING SECTION

FLOW MEASUREMENT SECTION

APPLIANCE A — 1

APPLIANCE B — 2

APPLIANCE C — 3

118
DISPLAY SECTION

116
SEISMOSCOPE

36

FIG. 11

## FIG. 12

```
                                    ┌─────────────────────┐
                                    │    START COMMAND     │──124
                                    └─────────────────────┘
                                              │
                                              ▼
        ┌──────────────────────┐   ┌─────────────────────────┐
    127─│ INTERVAL SETTING COMMAND│   │ FLOW MEASUREMENT COMMAND│──125
        └──────────────────────┘   └─────────────────────────┘
                                              │
                                              ▼
                                         ╱─────────╲──126
                                    NO  ╱ FLOW CHANGE╲
                                   ◄───◄ DETERMINATION ►
                                        ╲  COMMAND   ╱
                                         ╲─────────╱
                                              │ YES
                                              ▼
        ┌──────────────────────┐   ┌─────────────────────┐
    130─│ INTERVAL SETTING COMMAND│   │   RISE WAVEFORM     │──128
        └──────────────────────┘   │ GENERATION COMMAND  │
                                    └─────────────────────┘
                                              │
                                              ▼
                                         ╱─────────╲──129
                                    NO ╱ APPLIANCE PATTERN╲
                                   ◄──◄ COMPARISON DETERMINATION►
                                       ╲    COMMAND    ╱
                                        ╲─────────────╱
                                              │ YES
                                              ▼
                                    ┌─────────────────────┐
                                    │    APPLIANCE        │──131
                                    │ SPECIFICATION COMMAND│
                                    └─────────────────────┘
                                              │
                                              ▼
                                        (   END   )
```

# FIG. 13

## FIG. 14

## FIG. 15

FIG. 16

CURRENT-CARRYING LEVEL CHANGE DETECTION UNIT — 222a

OPERATION START SIGNAL CONVERSION UNIT — 222b

OPERATION SIGNAL DETERMINATION UNIT — 211e

TRANSMISSION CIRCUIT — 211f

OPERATION STOP UNIT CONVERSION UNIT — 222c

IDENTIFICATION CODE CHANGE UNIT

OPERATING INFORMATION ACQUISITION UNIT

APPLIANCE WIRELESS MODULE

APPLIANCE INFORMATION TRANSMITTER

222

226

227    211d

APPLIANCE INFORMATION

202

211b

EP 2 258 985 A1

42

## FIG. 17

## FIG. 18

*FIG. 19*

*FIG. 20*

*FIG. 21*

FIG. 22

*EP 2 258 985 A1*

<table>
<tr><td colspan="2" align="center"><b>INTERNATIONAL SEARCH REPORT</b></td><td>International application No.<br><br>PCT/JP2009/000815</td></tr>
</table>

| | |
|---|---|
| A. CLASSIFICATION OF SUBJECT MATTER<br>*F23N5/18*(2006.01)i, *F23N5/26*(2006.01)i | |

According to International Patent Classification (IPC) or to both national classification and IPC

| B. FIELDS SEARCHED |
|---|
| Minimum documentation searched (classification system followed by classification symbols)<br>F23N5/18, F23N5/26 |

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>X | JP 2007-292393 A  (Matsushita Electric Industrial Co., Ltd.),<br>08 November, 2007 (08.11.07),<br>Par. Nos. [0025] to [0080]<br>(Family: none) | 1,3-6,11-17<br>2 |
| Y | JP 2002-44750 A  (Asahi Kasei Corp.),<br>08 February, 2002 (08.02.02),<br>Par. Nos. [0024] to [0055]<br>(Family: none) | 1,3-6,11-17 |
| Y | JP 2004-363880 A  (Matsushita Electric Industrial Co., Ltd.),<br>24 December, 2004 (24.12.04),<br>Par. Nos. [0027] to [0047]<br>(Family: none) | 1,3-6,11-17 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered  to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>30 April, 2009 (30.04.09) | Date of mailing of the international search report<br>19 May, 2009 (19.05.09) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
|---|
| PCT/JP2009/000815 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2003-315134 A  (Tokyo Gas Co., Ltd.), 06 November, 2003 (06.11.03), Par. Nos. [0045] to [0123] (Family: none) | 7-10 |
| A | JP 2003-194331 A  (Tokyo Gas Co., Ltd.), 09 July, 2003 (09.07.03), Par. Nos. [0014] to [0204] (Family: none) | 7-10 |

Form PCT/ISA/210 (continuation of second sheet) (April 2007)

**INTERNATIONAL SEARCH REPORT**

| International application No. |
| --- |
| PCT/JP2009/000815 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
    because they relate to subject matter not required to be searched by this Authority, namely:

2. ☐ Claims Nos.:
    because they relate to parts of the international application that do not comply with the prescribed requirements to such an extent that no meaningful international search can be carried out, specifically:

3. ☐ Claims Nos.:
    because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
    (See extra sheet.)

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.    Consequently, this international search report is restricted to the invention first mentioned in the claims; it is covered by claims Nos.:

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2007)

**INTERNATIONAL SEARCH REPORT**

| International application No. |
| --- |
| PCT/JP2009/000815 |

Continuation of Box No.III of continuation of first sheet(2)

The technical feature common to all the invention of claim 1 and the inventions of claims 2 - 10 is "an instrument management system comprising a flow measuring unit connected to a gas supply pipe, for measuring a gas consumption rate, a communication unit for communicating a gas consumption rate measured, to a gas supplier, and an accumulation unit for accumulating the usage of each gas consumer for a predetermined time period". However, it has been apparent that the technical feature is not novel, since it was disclosed in Document 1.

As a result, those common matters are not the special technical features within the meaning of PCT Rule 13.2, second sentence, since they make no contribution over the prior art.

Hence, there is no matter common to all the invention of claim 1 and the inventions of claims 2 - 10.

Between those different inventions, no technical relationship within the meaning of PCT Rule 13 can be seen, since there exists no other common matter which can be considered as a special technical feature within the meaning of PCT Rule 13.2, second sentence.

However, the requirement of unity of invention is not asked for the inventions of claims 2 - 6, since the search has been substantially ended.

Hence, it is apparent that the inventions of claims 7 - 10 do not comply with the requirement of unity of invention.

International Searching Authority has admitted that this application has the following inventions.

First invention: the invention of claims 1 - 6 and 11 - 17.
Second invention: the invention of claim 7.
Third invention: the invention of claim 8.
Fourth invention: the invention of claim 9.
Fifth invention: the invention of claim 10.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002262367 A
- JP 3236513 A
- JP 8178195 A
- JP 2008056816 A
- JP 2008056817 A
- JP 2008056818 A